# EUROPEAN PATENT SPECIFICATION

(11) **EP 3 874 644 B1**
(45) Date of publication and mention of the grant of the patent: **15.03.2023**
(21) Application number: 19798761.3
(22) Date of filing: 31.10.2019
(51) Int. Cl.: H04L 1/18, H04L 5/00

(54) **FEEDBACK SIGNALING FOR SIDELINK**
RÜCKKOPPLUNGSSIGNALISIERUNG FÜR SIDELINK
SIGNALISATION DE RÉTROACTION POUR UNE LIAISON LATÉRALE

(30) Priority: 02.11.2018 US 201862754637 P
(43) Date of publication of application: 08.09.2021
(73) Proprietor: TELEFONAKTIEBOLAGET LM ERICSSON (PUBL), 164 83 Stockholm (SE)
(72) Inventor: BLASCO SERRANO, Ricardo, 02260 ESPOO (FI); DO, Hieu, 177 32 JÄRFÄLLA (SE); ASHRAF, Shehzad Ali, 52070 AACHEN (DE)
(74) Representative: Ericsson
(86) International application number: PCT/SE2019/051100
(87) International publication number: WO 2020/091683

(56) References cited:
- EP-A1- 3 313 136
- US-A1- 2018 262 317
- ITL: "Discussion on NR V2X HARQ mechanism", 3GPP DRAFT; R1-1811615_NR-V2X_HARQ, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Chengdu, China; 20181008 - 20181012 29 September 2018 (2018-09-29), XP051519009, Retrieved from the Internet: URL:http://www.3gpp.org/ftp/tsg%5Fran/WG1% 5FRL1/TSGR1%5F94b/Docs/R1%2D1811615%2Ezip [retrieved on 2018-09-29]
- Stefania Sesia ET AL: "LTE-THE UMTS LONG TERM EVOLUTION" In: "LTE-THE UMTS LONG TERM EVOLUTION", 1 November 2011 (2011-11-01), John Wiley & Sons John Wiley & Sons, XP055232065, vol. 27, pages 318-321, figure 14.3 section 14.2.3
- HUAWEI ET AL: "Text proposal for TR 36.888 on coverage improvement", 3GPP DRAFT; R1-124704, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. New Orleans, USA; 20121112 - 20121116 3 November 2012 (2012-11-03), XP050662748, Retrieved from the Internet: URL:http://www.3gpp.org/ftp/tsg_ran/WG1_RL 1/TSGR1_71/Docs/ [retrieved on 2012-11-03]

## Description

### TECHNICAL FIELD

The present invention generally relates to wireless communication networks, and particularly relates to improvements in operation of sidelink (e.g., device-to-device or D2D) communications a wireless communication network.

### BACKGROUND

Long Term Evolution (LTE) is an umbrella term for so-called fourth generation (4G) radio access technologies developed within the Third-Generation Partnership Project (3GPP) and initially standardized in Releases 8 and 9, also known as Evolved UTRAN (E-UTRAN). LTE is targeted at various licensed frequency bands and is accompanied by improvements to non-radio aspects commonly referred to as System Architecture Evolution (SAE), which includes Evolved Packet Core (EPC) network. LTE continues to evolve through subsequent releases. One of the features of Release 11 is an enhanced Physical Downlink Control Channel (ePDCCH), which has the goals of increasing capacity and improving spatial reuse of control channel resources, improving inter-cell interference coordination (ICIC), and supporting antenna beamforming and/or transmit diversity for control channel.

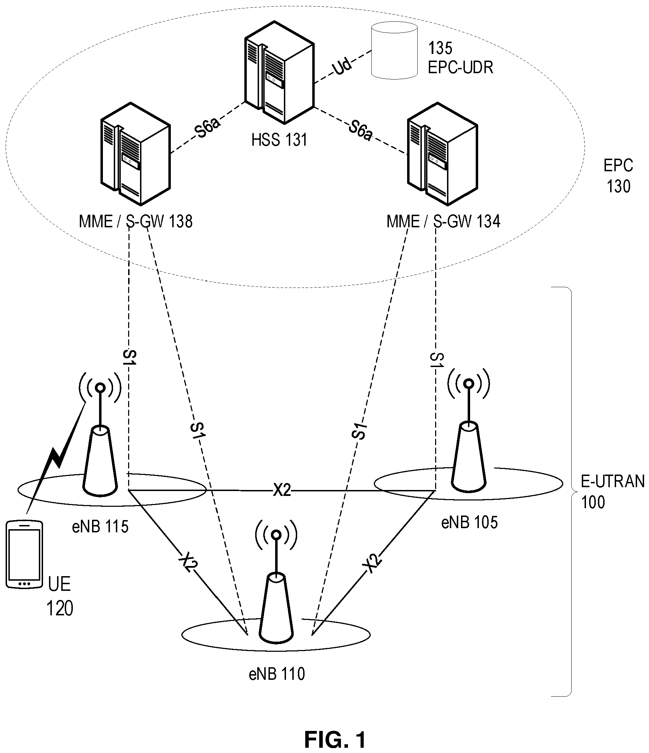

An overall exemplary architecture of a network comprising LTE and SAE is shown in Figure 1. E-UTRAN 100 comprises one or more evolved Node B's (eNB), such as eNBs 105, 110, and 115, and one or more user equipment (UE), such as UE 120. As used within 3GPP specifications, "user equipment" (or "UE") can refer to any wireless communication device (e.g., smartphone or computing device) that is capable of communicating with 3GPP-standard-compliant network equipment, including E-UTRAN and earlier-generation RANs (e.g., UTRAN/"3G" and/or GERAN/"2G") as well as later-generation RANs in some cases.

As specified by 3GPP, E-UTRAN 100 is responsible for all radio-related functions in the network, including radio bearer control, radio admission control, radio mobility control, scheduling, and dynamic allocation of resources to UEs in uplink (UL) and downlink (DL), as well as security of the communications with the UE. These functions reside in the eNBs, such as eNBs 105, 110, and 115, which communicate with each other via an X1 interface. The eNBs also are responsible for the E-UTRAN interface to EPC 130, specifically the S1 interface to the Mobility Management Entity (MME) and the Serving Gateway (SGW), shown collectively as MME/S-GWs 134 and 138 in Figure 1.

In general, the MME/S-GW handles both the overall control of the UE and data flow between UEs (such as UE 120) and the rest of the EPC. More specifically, the MME processes the signaling (e.g., control plane, CP) protocols between UEs and EPC 130, which are known as the Non-Access Stratum (NAS) protocols. The S-GW handles all Internet Protocol (IP) data packets (e.g., user plane, UP) between UEs and EPC 130, and serves as the local mobility anchor for the data bearers when a UE moves between eNBs, such as eNBs 105, 110, and 115.

EPC 130 can also include a Home Subscriber Server (HSS) 131, which manages user- and subscriber-related information. HSS 131 can also provide support functions in mobility management, call and session setup, user authentication and access authorization. The functions of HSS 131 can be related to the functions of legacy Home Location Register (HLR) and Authentication Centre (AuC) functions or operations.

In some examples, HSS 131 can communicate with a user data repository (UDR) - labelled EPC-UDR 135 in Figure 1 - via a Ud interface. The EPC-UDR 135 can store user credentials after they have been encrypted by AuC algorithms. These algorithms are not standardized (i.e., vendor-specific), such that encrypted credentials stored in EPC-UDR 135 are inaccessible by any other vendor than the vendor of HSS 131.

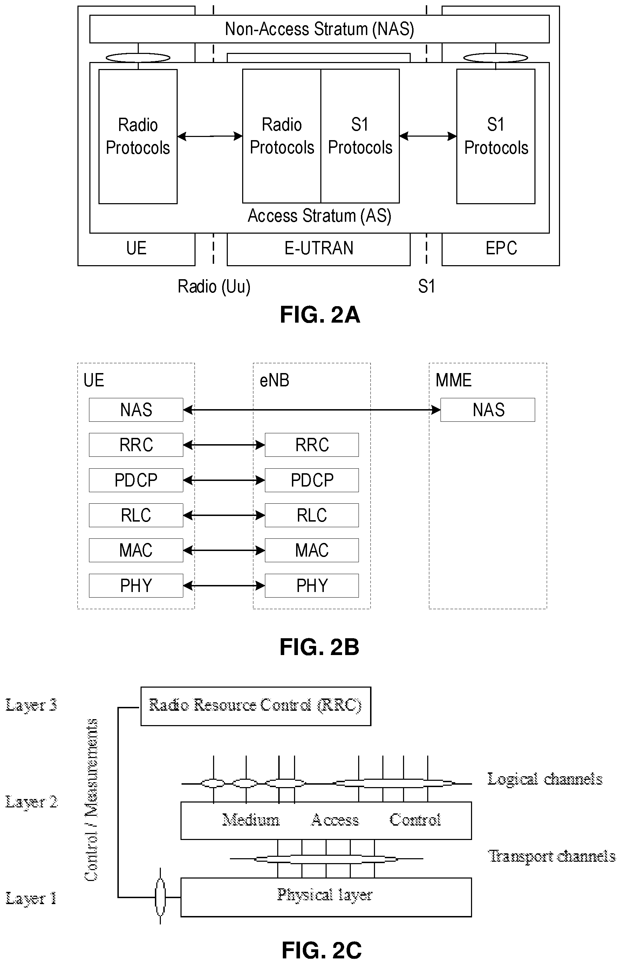

Figure 2A shows a high-level block diagram of an exemplary LTE architecture in terms of its constituent entities - UE, E-UTRAN, and EPC - and high-level functional division into the Access Stratum (AS) and the Non-Access Stratum (NAS). Figure 2A also illustrates two particular interface points, namely Uu (UE/E-UTRAN Radio Interface) and S1 (E-UTRAN/EPC interface), each using a specific set of protocols, *i.e.,* Radio Protocols and S1 Protocols. Each of the two protocols can be further segmented into user plane (or "U-plane") and control plane (or "C-plane") protocol functionality. On the Uu interface, the U-plane carries user information (*e.g.,* data packets) while the C-plane is carries control information between UE and E-UTRAN.

Figure 2B illustrates a block diagram of an exemplary C-plane protocol stack on the Uu interface comprising Physical (PHY), Medium Access Control (MAC), Radio Link Control (RLC), Packet Data Convergence Protocol (PDCP), and Radio Resource Control (RRC) layers. The PHY layer is concerned with how and what characteristics are used to transfer data over transport channels on the LTE radio interface. The MAC layer provides data transfer services on logical channels, maps logical channels to PHY transport channels, and reallocates PHY resources to support these services. The RLC layer provides error detection and/or correction, concatenation, segmentation, and reassembly, reordering of data transferred to or from the upper layers. The PHY, MAC, and RLC layers perform identical functions for both the U-plane and the C-plane. The PDCP layer provides ciphering/deciphering and integrity protection for both U-plane and C-plane, as well as other functions for the U-plane such as header compression.

Figure 2C shows a block diagram of an exemplary LTE radio interface protocol architecture from the perspective of the PHY. The interfaces between the various layers are provided by Service Access Points (SAPs), indicated by the ovals in Figure 2C. The PHY layer interfaces with the MAC and RRC protocol layers described above. The MAC provides different logical channels to the RLC protocol layer (also described above), characterized by the type of information transferred, whereas the PHY provides a transport channel to the MAC, characterized by how the information is transferred over the radio interface. In providing this transport service, the PHY performs various functions including error detection and correction; rate-matching and mapping of the coded transport channel onto physical channels; power weighting, modulation; and demodulation of physical channels; transmit diversity, beamforming multiple input multiple output (MIMO) antenna processing; and providing radio measurements to higher layers, such as RRC.

Generally speaking, a physical channel corresponds a set of resource elements carrying information that originates from higher layers. Downlink (*i.e.,* eNB to UE) physical channels provided by the LTE PHY include Physical Downlink Shared Channel (PDSCH), Physical Multicast Channel (PMCH), Physical Downlink Control Channel (PDCCH), Relay Physical Downlink Control Channel (R-PDCCH), Physical Broadcast Channel (PBCH), Physical Control Format Indicator Channel (PCFICH), and Physical Hybrid ARQ Indicator Channel (PHICH). In addition, the LTE PHY downlink includes various reference signals, synchronization signals, and discovery signals.

PDSCH is the main physical channel used for unicast downlink data transmission, but also for transmission of RAR (random access response), certain system information blocks, and paging information. PBCH carries the basic system information, required by the UE to access the network. PDCCH is used for transmitting downlink control information (DCI), mainly scheduling decisions, required for reception of PDSCH, and for uplink scheduling grants enabling transmission on PUSCH.

Uplink (*i.e.,* UE to eNB) physical channels provided by the LTE PHY include Physical Uplink Shared Channel (PUSCH), Physical Uplink Control Channel (PUCCH), and Physical Random-Access Channel (PRACH). In addition, the LTE PHY uplink includes various reference signals including demodulation reference signals (DM-RS), which are transmitted to aid the eNB in the reception of an associated PUCCH or PUSCH; and sounding reference signals (SRS), which are not associated with any uplink channel.

PUSCH is the uplink counterpart to the PDSCH. PUCCH is used by UEs to transmit uplink control information, including HARQ acknowledgements, channel state information reports, etc. PRACH is used for random access preamble transmission.

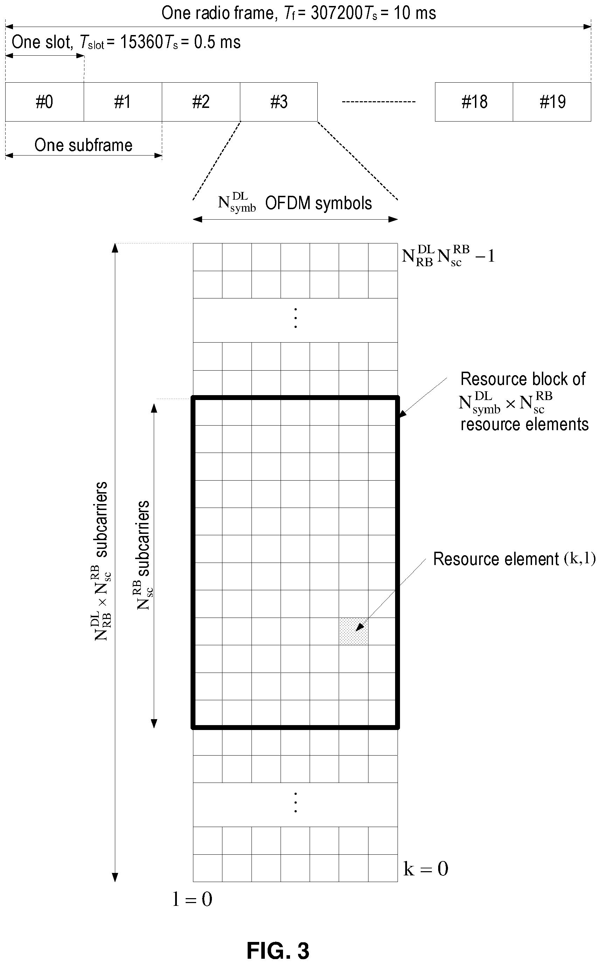

The multiple access scheme for the LTE PHY is based on Orthogonal Frequency Division Multiplexing (OFDM) with a cyclic prefix (CP) in the downlink, and on Single-Carrier Frequency Division Multiple Access (SC-FDMA) with a cyclic prefix in the uplink. To support transmission in paired and unpaired spectrum, the LTE PHY supports both Frequency Division Duplexing (FDD) (including both full- and half-duplex operation) and Time Division Duplexing (TDD). Figure 3 shows an exemplary radio frame structure ("type 1") used for LTE FDD downlink (DL) operation. The DL radio frame has a fixed duration of 10 ms and consists of 20 slots, labeled 0 through 19, each with a fixed duration of 0.5 ms. A 1-ms subframe comprises two consecutive slots where subframe *i* consists of slots 2*i* and 2*i*+1. Each exemplary FDD DL slot consists of N^{DL}_{symb} OFDM symbols, each of which is comprised of N_{sc} OFDM subcarriers. Exemplary values of N^{DL}_{symb} can be 7 (with a normal CP) or 6 (with an extended-length CP) for subcarrier spacing (SCS) of 15 kHz. The value of N_{sc} is configurable based upon the available channel bandwidth. Since persons of ordinary skill in the art are familiar with the principles of OFDM, further details are omitted in this description.

As shown in Figure 3, a combination of a particular subcarrier in a particular symbol is known as a resource element (RE). Each RE is used to transmit a particular number of bits, depending on the type of modulation and/or bit-mapping constellation used for that RE. For example, some REs may carry two bits using QPSK modulation, while other REs may carry four or six bits using 16- or 64-QAM, respectively. The radio resources of the LTE PHY are also defined in terms of physical resource blocks (PRBs). A PRB spans N^{RB}_{sc} sub-carriers over the duration of a slot (*i.e.,* N^{DL}_{symb} symbols), where N^{RB}_{SC} is typically either 12 (with a 15-kHz sub-carrier bandwidth) or 24 (7.5-kHz bandwidth). A PRB spanning the same N^{RB}_{sc} subcarriers during an entire subframe (*i.e.,* 2N^{DL}_{symb} symbols) is known as a PRB pair. Accordingly, the resources available in a subframe of the LTE PHY DL comprise N^{DL}_{RB} PRB pairs, each of which comprises 2N^{DL}_{symb}● N^{RB}_{sc} REs. For a normal CP and 15-KHz SCS, a PRB pair comprises 168 REs.

One exemplary characteristic of PRBs is that consecutively numbered PRBs (*e.g.,* PRBᵢ and PRBᵢ₊₁) comprise consecutive blocks of subcarriers. For example, with a normal CP and 15-KHz sub-carrier bandwidth, PRB₀ comprises sub-carrier 0 through 11 while PRB₁ comprises sub-carriers 12 through 23. The LTE PHY resource also can be defined in terms of virtual resource blocks (VRBs), which are the same size as PRBs but may be of either a localized or a distributed type. Localized VRBs can be mapped directly to PRBs such that VRB *n*_{VRB} corresponds to PRB *n*_{PRB} = *n*_{VRB}. On the other hand, distributed VRBs may be mapped to non-consecutive PRBs according to various rules, as described in 3GPP Technical Specification (TS) 36.213 or otherwise known to persons of ordinary skill in the art. However, the term "PRB" shall be used in this disclosure to refer to both physical and virtual resource blocks. Moreover, the term "PRB" will be used henceforth to refer to a resource block for the duration of a subframe, *i.e.,* a PRB pair, unless otherwise specified.

An exemplary LTE FDD uplink (UL) radio frame can be configured in a similar manner as the exemplary FDD DL radio frame shown in Figure 3. Using terminology consistent with the above DL description, each UL slot consists of N^{UL}_{symb} OFDM symbols, each of which is comprised of N_{sc} OFDM subcarriers.

As discussed above, the LTE PHY maps the various DL and UL physical channels to resources, such as the DL resources of the arrangement shown in Figure 3. For example, the PHICH carries HARQ feedback (*e.g.,* ACK/NAK) for UL transmissions by the UEs. Similarly, PDCCH carries scheduling assignments, channel quality feedback (*e.g.,* CSI) for the UL channel, and other control information. Likewise, a PUCCH carries uplink control information such as scheduling requests, CSI for the downlink channel, HARQ feedback for eNB DL transmissions, and other control information. Both PDCCH and PUCCH can be transmitted on aggregations of one or several consecutive control channel elements (CCEs), and a CCE is mapped to the physical resource based on resource element groups (REGs), each of which is comprised of a plurality of REs. For example, a CCE can comprise nine (9) REGs, each of which can comprise four (4) REs.

In LTE, DL transmissions are dynamically scheduled, *i.e.,* in each subframe the base station transmits control information indicating the terminal to which data is transmitted and upon which resource blocks the data is transmitted, in the current downlink subframe. This control signaling is typically transmitted in the first *n* OFDM symbols in each subframe and the number *n* (=1,2,3 or 4) is known as the Control Format Indicator (CFI) indicated by the PCFICH transmitted in the first symbol of the control region.

During Rel-12, LTE was extended with support for device-to-device (D2D) communication (also referred "sidelink" or "SL" for short) features targeting both commercial and public safety applications. One feature enabled by Rel-12 LTE is device discovery, where devices are able to sense the proximity of other devices and associated applications by broadcasting and detecting discovery messages that carry device and application identities. Another feature enabled by Rel-12 is direct communication based on physical channels terminated directly between devices. LTE sidelink transmissions are broadcast messages, such that there is no distinction between potential receivers. Given this broadcast arrangement, LTE devices do not provide hybrid ARQ (HARQ) feedback in response to received sidelink transmissions.

As such, there is no mechanism currently defined to support HARQ feedback for LTE sidelink transmissions. Furthermore, there are various problems, drawbacks, and/or issues with using conventional cellular (e.g., uplink/downlink) HARQ feedback mechanisms for sidelink communications. However, future standards (also referred to as "New Radio," "NR," or "5G") are considering incorporating SL transmissions for which HARQ feedback may be required. As such, there is a need for flexible and efficient techniques for conveying HARQ feedback in response to SL transmissions.

Related techniques or prior art are:
ITL: "Discussion on NR V2X HARQ mechanism", 3GPP DRAFT R1-1811615 of September 29, 2018 discusses general HARQ design aspects for NR Vehicle-to-X (V2X) unicast/groupcast and broadcast transmission mechanism.
EP 3 313 136 A1 relates to a V2X communication method performed by a terminal in a wireless communication system. The method comprises: determining priority of information related to the V2X communication; selecting a transmission time interval (TTI) on the basis of the priority; and transmitting the information on the basis of the selected TTI. If the information related to the V2X communication is information having high priority, a first TTI is selected, and if the information related to the V2X communication is information having relatively lower priority than the information having high priority, a second TTI is selected.
US 2018/262317 A1 discloses a system and a method for low latency acknowledgements including a first communication unit receiving a data message from a second communication unit on a data channel, decoding the data message, and transmitting, in response to the decoding, an acknowledgement signal on a control channel to the second communication unit. The acknowledgement signal has a partially decodable structure. Transmitting the acknowledgement signal further includes transmitting multiple repetitions of a same time domain waveform during one symbol period. In some settings, transmitting the acknowledgement signal further comprises transmitting K repetitions of a same time domain waveform with a frequency domain characteristic consisting of one non-zero tone for every K tones with K being a positive integer. In some settings, the acknowledgement signal is processable by the second communication unit using a first N out of the K repetitions, N being a positive integer less than K.
Stefania Sesia ET AL: "LTE-THE UMTS LONG TERM EVOLUTION", John Wiley & Sons, vol. 27, pages 318-321, published on November 1, 2011 discloses the generation of an SC-FDMA signal in the frequency domain and using a Discrete Fourier Transform-Spread-OFDM (DFT-S-OFDM) structure.
HUAWEI ET AL: "Text proposal for TR 36.888 on coverage improvement", 3GPP DRAFT R1-124704 of November 3, 2012 describes techniques of coverage improvement for low cost MTC UEs.

### SUMMARY

Embodiments of the present disclosure provide specific improvements to sidelink (or D2D) communication between user equipment (UEs) in a wireless communication network, such as by facilitating solutions to overcome the exemplary problems described above.

The present disclosure incldues the method of claim 1 performed by a first UE (*e.g.,* wireless device, MTC device, NB-IoT device, modem, *etc.* or component thereof) communicating with a second UE and, optionally, with a network node (*e.g.,* base station, eNB, gNB, *etc.,* or components thereof) in a radio access network (RAN).

The present disclosure also includes the method of claim 6 performed by a second UE (*e.g.,* wireless device, MTC device, NB-IoT device, modem, *etc.* or component thereof) communicating with a first UE and, optionally, with a network node (*e.g.,* base station, eNB, gNB, *etc.,* or components thereof) in the RAN.

The present disclosure further includes a user equipment (UEs, *e.g*., wireless devices, MTC devices, NB-IoT devices, or components thereof, such as a modem) according to claim 14.

These and other objects, features and advantages of the embodiments of the present disclosure will become apparent upon reading the following Detailed Description in view of the Drawings briefly described below.

### BRIEF DESCRIPTION OF THE DRAWINGS

Figure 1 is a high-level block diagram of an exemplary architecture of the Long-Term Evolution (LTE) Evolved UTRAN (E-UTRAN) and Evolved Packet Core (EPC) network, as standardized by 3GPP.
Figure 2A is a high-level block diagram of an exemplary E-UTRAN architecture in terms of its constituent components, protocols, and interfaces.
Figure 2B is a block diagram of exemplary protocol layers of the control-plane portion of the radio (Uu) interface between a user equipment (UE) and the E-UTRAN.
Figure 2C is a block diagram of an exemplary LTE radio interface protocol architecture from the perspective of the PHY layer.
Figure 3 is a block diagram showing an exemplary LTE downlink radio frame structure used for frequency division duplexing (FDD) operation.
Figure 4 shows a high-level diagram illustrating various V2X communications in an 3GPP network (e.g., LTE and/or NR) supporting D2D communications.
Figure 5 illustrates a time-domain comb sequence with *k*=5 repetitions of a basic sequence, **s_{b}**, according to various examples of the present disclosure.
Figure 6 shows an exemplary technique for generating a comb sequence using an inverse FFT (IFFT) modulator, according to various examples of the present disclosure.
Figure 7 illustrates how the X=5 repetitions of the basic sequence shown in Figure 5 can be divided among various HARQ receiver operations, according to various examples of the present disclosure.
Figure 8 shows a flow diagram of an exemplary method (e.g., procedure) performed by a first user equipment (UE, *e.g*., wireless device, MTC device, NB-IoT device, modem, etc. or component thereof), according to various examples of the present disclosure.
Figure 9 shows a flow diagram of an exemplary method (e.g., procedure) performed by a second user equipment (UE, *e.g*., wireless device, MTC device, NB-IoT device, modem, etc. or component thereof), according to various examples of the present disclosure.
Figure 10 shows a block diagram of an exemplary wireless device or UE according to various examples of the present disclosure.
Figure 11 shows a block diagram of an exemplary network node according to various examples of the present disclosure.
Figure 12 shows a block diagram of an exemplary network configured to provide over-the-top (OTT) data services between a host computer and a UE, according to various examples of the present disclosure.

### DETAILED DESCRIPTION

Some of the examples contemplated herein will now be described more fully with reference to the accompanying drawings. Other examples, however, are contained within the scope of the subject matter disclosed herein, the disclosed subject matter should not be construed as limited to only the examples set forth herein; rather, these examples are provided to convey the scope of the subject matter to those skilled in the art. Furthermore, the following terms are used throughout the description given below:
- **Radio Node:** As used herein, a "radio node" can be either a "radio access node" or a "wireless device."
- **Radio Access Node:** As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station (*e.g*., a New Radio (NR) base station (gNB) in a 3GPP Fifth Generation (5G) NR network or an enhanced or evolved Node B (eNB) in a 3GPP LTE network), base station distributed components (e.g., CU and DU), a high-power or macro base station, a low-power base station (*e.g.,* micro, pico, femto, or home base station, or the like), an integrated access backhaul (IAB) node, a transmission point, a remote radio unit (RRU or RRH), and a relay node.
- **Core Network Node:** As used herein, a "core network node" is any type of node in a core network. Some examples of a core network node include, *e.g.,* a Mobility Management Entity (MME), a serving gateway (SGW), a Packet Data Network Gateway (P-GW), an access and mobility management function (AMF), a session management function (AMF), a user plane function (UPF), a Service Capability Exposure Function (SCEF), or the like.
- **Wireless Device:** As used herein, a "wireless device" (or "WD" for short) is any type of device that has access to (*i.e.,* is served by) a cellular communications network by communicate wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (or "UE" for short). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, *etc.*
- **Network Node:** As used herein, a "network node" is any node that is either part of the radio access network (e.g., a radio access node or equivalent name discussed above) or of the core network (e.g., a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (*e.g*., administration) in the cellular communications network.

Note that the description given herein focuses on a 3GPP cellular communications system and, as such, 3GPP terminology or terminology similar to 3GPP terminology is oftentimes used. However, the concepts disclosed herein are not limited to a 3GPP system. Furthermore, although the term "cell" is used herein, it should be understood that (particularly with respect to 5G NR) beams may be used instead of cells and, as such, concepts described herein apply equally to both cells and beams.

As briefly mentioned above, there are no mechanisms currently defined to support HARQ feedback for LTE or NR sidelink transmissions, and there are various problems, drawbacks, and/or issues with using conventional cellular (e.g., UL/DL) HARQ feedback mechanisms for sidelink communications. These aspects are discussed in more detail below.

While LTE was primarily designed for user-to-user communications, 5G (also referred to as "NR") cellular networks are envisioned to support both high single-user data rates (*e.g.,* 1 Gb/s) and large-scale, machine-to-machine communication involving short, bursty transmissions from many different devices that share the frequency bandwidth. 3GPP 5G/NR standards are currently targeting a wide range of data services including eMBB (enhanced Mobile Broad Band), URLLC (Ultra-Reliable Low Latency Communication), and Machine-Type Communications (MTC). These services can have different requirements and objectives. For example, URLLC is intended to provide a data service with extremely strict error and latency requirements, *e.g*., error probabilities as low as 10⁻⁵ or lower and end-to-end latency no greater than one millisecond (1 ms). For eMBB, the requirements on latency and error probability can be less stringent than URLLC, whereas the required peak rate and/or spectral efficiency can be higher.

One of the solutions for low latency data transmission is shorter transmission time intervals. For NR, in addition to transmission in a slot (such as for LTE, discussed above), a mini-slot transmission is also allowed to reduce latency. A mini-slot can include any number of 1 to 14 OFDM symbols. It should be noted that the concepts of slot and mini-slot are not specific to a specific service meaning that a mini-slot may be used for either eMBB, URLLC, or other services.

One of the potential extensions for the D2D work includes support of V2X communication, which includes any combination of direct communication between vehicles (V2V), pedestrians (V2P), and infrastructure (V2I). V2X is considered important for Intelligent Transportation Systems (ITS) applications, including road transport. V2x communication may take advantage of a network infrastructure, when available, but at least basic V2x connectivity should be possible even without network coverage. Providing an LTE-based V2x interface may be economically advantageous because of the LTE economies of scale. Furthermore, it can facilitate tighter integration between communications involving infrastructure (e.g., V2I) and communications not involving infrastructure (e.g., V2V and V2P), as compared to using a dedicated V2X technology.

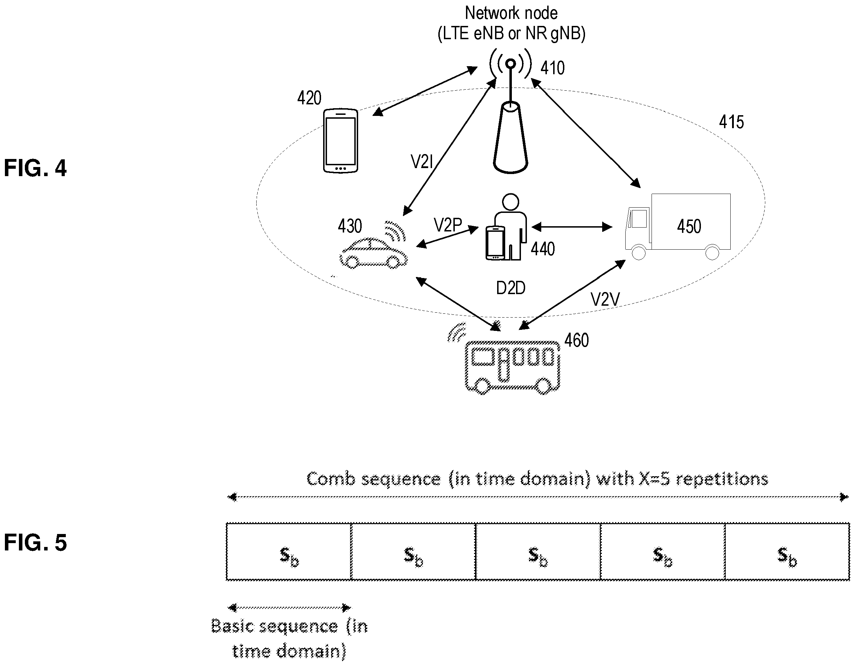

Figure 4 shows a high-level diagram illustrating various V2X communications in a wireless communication network supporting D2D communications. More specifically, the network shown in Figure 4 includes a network node 410 providing communications to various user equipment (UEs, e.g., 420, 430, 450) located within the coverage area of a cell 415. For example, the network node can be an LTE eNB (e.g., such as shown in Figure 1) or an NR gNB. In addition, the various UEs within cell 415 can directly communicate with each other via SL communications. In addition, some of the UEs within cell 415 (e.g., 430 and 450) can communicate with one or more UEs outside of the coverage area of cell 415 (e.g., 460). In the exemplary arrangement shown in Figure 4, UE 440 is associated with an individual, while UEs 430, 450, and 460 are associated with respective vehicles.

Depending on the particular application, V2X communications may carry both non-safety and safety information, where each of the applications and services may be associated with specific requirements, e.g., latency, reliability, capacity, etc. The European Telecommunication Standards Institute (ETSI) has defined two types of messages for road safety: Co-operative Awareness Message (CAM) and Decentralized Environmental Notification Message (DENM).

A CAM can be used by a vehicle (e.g., emergency vehicle) to broadcast a notification to surrounding vehicles and/or devices of the vehicle's presence and other relevant parameters. CAMs target other vehicles, pedestrians, and infrastructure, and are handled by their applications. CAMs also serve as active assistance to safety driving for normal traffic. The availability of a CAM is checked every 100ms, yielding a maximum detection latency of 100ms for most messages. However, the latency requirement for pre-crash sensing warning CAM is 50ms. On the other hand, DENMs are event-triggered, such as by braking, and the availability of a DENM message is also checked every 100ms, yielding a maximum detection latency of 100ms. The package size of CAMs and DENMs varies from 100+ to 800+ bytes and the typical size is around 300 bytes. Each message is supposed to be detected by all vehicles in proximity.

The Society of the Automotive Engineers (SAE) has defined a Basic Safety Message (BSM) for dedicated short-range communication (DSRC). BSMs can have various sizes and are classified into different priorities based on the importance and/or urgency of each message.

Returning to the discussion of sidelink communications, transmissions can be generally categorized into the following three categories or groups:
- Unicast: one-to-one transmissions (i.e., single transmitter and single receiver).
- Groupcast (also known as multicast): one-to-many transmissions (i.e., single transmitter and multiple receivers). Usually the set of receivers is a subset of the set of potential receivers (e.g., all within communication range).
- Broadcast: one-to-all transmissions (i.e., single transmitter and multiple receivers). In this case, the message is intended for all potential receivers (e.g., all those within communication range).

For the cases of unicast and groupcast, a common assumption is that the transmitter is aware of the receiver or group of receivers. Such knowledge allows for advanced communication schemes, including hybrid automatic repeat request (HARQ) feedback, retransmissions, link adaptation, etc. In LTE, sidelink transmissions are broadcast messages from the perspective of the PHY layer, such that there is no distinction between potential receivers. As such, HARQ feedback is not used for LTE sidelink transmissions. In NR, sidelink transmissions will likely support unicast, groupcast, and broadcast at PHY level. Like in LTE, however, there is no mechanism currently defined for support HARQ feedback for NR sidelink transmissions. Furthermore, there are various problems, drawbacks, and/or issues with using conventional cellular (e.g., uplink/downlink) HARQ feedback mechanisms for sidelink communications.

For unicast and groupcast communications, it is common to use HARQ procedures, which include HARQ feedback and retransmissions. Typical feedback messages include positive or negative acknowledgement of transmissions (i.e., ACK and NACK messages, respectively). Upon reception of a feedback message in response to a data transmission, a UE can decide whether it needs to retransmit the same data. In the case of unicast, the relationship between transmitter and receiver is unambiguous (i.e., the origin of a feedback message is always known), while there may be some ambiguity for groupcast (i.e., a feedback message may or may not identify its transmitter). Knowledge of the feedback origin facilitates more sophisticated HARQ procedures (e.g., selectively sending feedback, etc.).

In general, in cellular UL/DL communications, a receiver generally has sufficiently accurate information about the expected power of a received data message. For example, the receiver can assume that its automatic gain compensation (AGC) loop is appropriately set, via measurements of reference signals (RS) associated with the data message, the cell, etc. In contrast, such knowledge is normally unavailable for SL communications. Instead, the receiver normally uses the first part of the received signal or data message to tune its AGC, e.g., via a dedicated AGC symbol in LTE SL or via a preamble in 802.11 WiFi.

In addition, the network controls the resources used by the different UEs in cellular UL/DL communications. For example, in Figure 4, network node 410 controls the resources used by the UEs in cell 415. As such, the network can guarantee that feedback messages from different HARQ transmitters (i.e., data receivers) can be separated and distinguished at the corresponding HARQ receiver (i.e., data transmitter). For example, this can be accomplished by assigning different resources for different feedback messages from the respective HARQ transmitters/data receivers.

Furthermore, UEs often need to switch from transmit (TX) to receive (RX) mode, resulting in non-usable overhead (e.g., "guard period") in the radio resources. In cellular UL/DL communications, this is not so critical because a network node (e.g., eNB, gNB, etc.) can ensure that switching is done without loss of data by scheduling transmissions appropriately. In SL communications, however, long switching times may lead to loss of data.

Accordingly, examples of the present disclosure provide novel, flexible, and efficient techniques for transmitting HARQ feedback in sidelink communications, where all operations for receiving a HARQ feedback message (e.g., TX-RX switching, AGC training, detection of the HARQ feedback message) must be performed in one OFDM symbol. More specifically, examples utilize a novel comb sequence for transmission of HARQ feedback. The comb sequence is configured to enable the receiver to perform all operations for receiving the HARQ feedback within one OFDM symbol. Furthermore, the comb sequence provides a framework for single and/or multiple HARQ feedback messages using one or multiple resources. This property facilitates HARQ feedback related to either unicast and groupcast communications within a single structure.

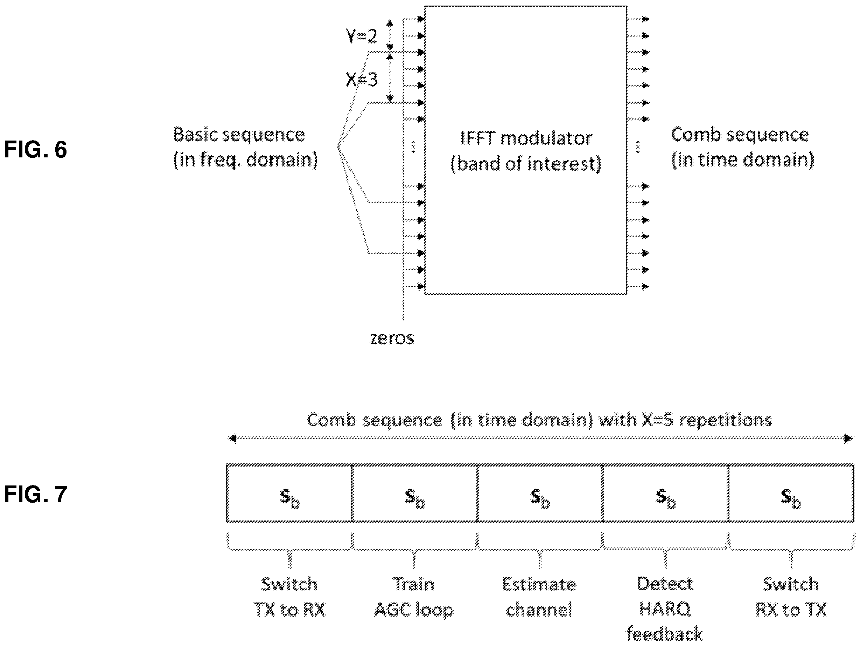

In the time domain, comb sequences consist of multiple repetitions of a basic sequence, **s_{b}.** In other words, if the sequence **s** has length X^{∗}n, then **s** = [**s**_{b} **s**_{b} ... **s**_{b}], with X repetitions of the length-n basic sequence, **s_{b}.** Figure 5 illustrates a time-domain comb sequence with X=5 repetitions of a basic sequence, **s_{b},** according to various examples of the present disclosure. Figure 6 shows an exemplary technique for generating a comb sequence using an inverse FFT (IFFT) modulator, according to various examples of the present disclosure.

According to the technique shown in Figure 6, a time-domain comb sequence can be generated by using only a subset of equally spaced frequency-domain inputs to the IFFT modulator, referred to as a "comb mapping." For example, the elements of the frequency-domain basic sequence can be mapped to each X^{th} input of the IFFT modulator, with the remaining IFFT inputs set to zero. The resulting time-domain comb sequence output by the IFFT modulator consists of X time-domain repetitions of the basic frequency-domain sequence. The comb is defined by two parameters: a spacing between IFFT inputs of successive elements of the basic frequency-domain sequence (e.g., width X) and a frequency-domain position of the first element of the basic frequency-domain sequence (i.e., the number of zero IFFT inputs before the input of the first element, called offset Y). In the exemplary arrangement shown in Figure 6, X = 3 and Y = 2.

In various examples, the HARQ transmitter can select the parameters (e.g., basic sequence, width X, offset Y) to use for generating the comb sequence based on various factors and/or rules, either individually or in combination. For example, an HARQ transmitter can select the parameters to use for generating the comb sequence based on any of the following:
- A field contained in sidelink control information (SCI) associated with the transmission (e.g., data packet) being acknowledged.
- A layer-1 (L1) or layer-2 (L2) identity and/or identifier (ID) associated with the transmitter or the receiver, e.g., transmitter ID, receiver ID, transmitter group ID, receiver group ID, HARQ process ID, link ID, ID agreed by transmitter(s) and receiver(s) during a connection establishment phase, etc.
- A configuration parameter related to the carrier, bandwidth part (BWP), and/or resource pool where the feedback, or the data packet being acknowledged, or the SCI associated with the packet being acknowledged are transmitted.
- A relation between a transmission time of the feedback and a transmission time of its associated data packet, e.g., time difference measured in number of OFDM symbols, subframes, or slots.
- Speed, velocity, direction, and/or location measurements associated with the transmitter and/or the receiver.
- A parameter associated with transmitter and/or receiver synchronization, e.g., synchronization source, priority of synchronization source, accuracy of synchronization source, etc.
- A parameter related to the waveform or modulation used, e.g., subcarrier spacing (SCS), cyclic prefix (CP) length, modulation order, etc. For example, X=4 can be selected for 30-kHz SCS and X=2 can be selected for 60-kHz SCS.
- Type of communication. For example, X=2 can be selected for unicast communications (i.e., where a single UE sends feedback), and some X>2 can be selected for groupcast communications (i.e., where multiple UEs may send feedback).

In some examples, the HARQ transmitter can selectively determine whether to use a comb sequence (or some other technique) when transmitting the HARQ feedback. For example, this determination can be based on a configuration of the frequency resources used for the feedback transmission and/or the associated data transmission, e.g., a resource pool, a bandwidth part, a carrier, etc. For example, if the feedback is transmitted in a first pool of resources then a comb sequence can be used; if the feedback is transmitted in a second pool of resources then another transmission technique can be used. For example, the other transmission technique can be a conventional technique that includes encoding bits using a channel code, mapping the encoded bits to modulation symbols, and mapping the modulation symbols to subcarriers comprising the second pool.

As another example, the HARQ transmitter's determination of whether to use a comb sequence or some other technique when transmitting the HARQ feedback can be based on whether other information should be transmitted together with the HARQ feedback. For example, if the HARQ feedback should be transmitted with a channel state information (CSI) report (e.g., channel quality indicator (CQI), rank indicator (RI), etc.), the other transmission technique can be used, whereas if no CSI report should be included, then the comb sequence can be used.

In some examples, a network node (e.g., base station, eNB, gNB, etc.) can configure the HARQ transmitter to use a comb sequence or some other technique when transmitting the HARQ feedback. In some examples, a network node can configure the HARQ transmitter with one or more rules and/or criteria used to selectively determine whether to use a comb sequence or some other technique when transmitting the HARQ feedback, including those discussed above.

In some examples, the HARQ transmitter can transmit an HARQ comb sequence using time and/or frequency resources dedicated for such transmissions. For example, dedicated frequency resources can include one or more dedicated symbols and/or one or more dedicated ranges of subcarriers. In some examples, the HARQ transmitter can transmit an HARQ comb sequence during a symbol that is used as a guard period (GP) by one or more other UEs.

In some examples, when a groupcast or multicast data transmission is directed to a plurality of UEs, each of the plurality of UEs can select a different, orthogonal comb sequence to use for transmitting HARQ feedback for the data transmission. In this manner, the various HARQ feedbacks can be multiplexed such that the groupcast or multicast data transmitter can distinguish between them. Orthogonality may be in time, frequency, or code domains. For example, each of the plurality of UEs can select a different set of comb parameters that results in a comb sequence that is orthogonal to comb sequences used by the other UEs. In some examples, each set of the comb parameters that can produce orthogonal comb sequences includes a common root sequence, a common width, a common offset, and a particular circular shift of the root sequence. In this manner, a particular set of comb parameters can be used to produce a comb sequence for HARQ transmission (as shown, e.g., in Figure 6) that is orthogonal to other comb sequences produced using other available circular shifts of the root sequence.

In other examples, when a groupcast or multicast data transmission is directed to a plurality of UEs, each of the plurality of UEs can select the same comb sequence (e.g., the same set of comb parameters) to use for transmitting HARQ feedback for the data transmission. In this manner, the data transmitter can determine whether or not some of the plurality of UE receivers failed to decode the data transmission. In some examples, UEs can be configured to select a particular comb sequence based on their geographical location, such that all UEs within a particular distance from a particular location select the same comb sequence for HARQ transmission. For example, UEs in a groupcast session that are within 200m of the data transmitter location can select a first comb sequence for HARQ feedback transmissions, UEs that are 200-400m distant can select a second comb sequence, etc. The particular comb sequence(s), the particular distance(s), and/or the particular location(s) can be configured by the network. In other examples, the UE can base the selection of the particular comb sequence on parameters in addition to location, such as UE speed or velocity.

In one example, the length of each repetition of the comb sequence can be based on the number of UEs participating in a groupcast session. For example, the comb width parameter X (reflected in the time domain as the number of repetitions) can be increased as the number of UEs in a groupcast or multicast session increases.

A UE receiving a HARQ comb feedback sequence uses each of the X repetitions of the basic sequence, **s_{b}**, comprising the feedback sequence for one of the receiving operations discussed above. In particular, the receiver uses an initial first number of the X repetitions to switch from transmit mode to receive mode (e.g., switch RF circuitry, etc.). The UE uses a subsequent second number (i.e., following the first number) of the X repetitions to train and/or configure its AGC loop, and a subsequent third number of the X repetitions for channel estimation. The UE then uses a subsequent fourth number of the X repetitions for detecting, decoding, and/or determining the HARQ message (e.g., ACK, NACK). Finally, if necessary and if any of the X repetitions are remaining, the UE uses the remaining number of the X repetitions to switch from receive mode back to transmit mode (e.g., if the UE is transmitting immediately after receiving feedback). Figure 7 illustrates how the X=5 repetitions of the basic sequence shown in Figure 5 can be divided among various HARQ receiver operations, according to examples of the present disclosure

Other than detecting the HARQ feedback, the other receiving operations described above are optional, such that not all of them are used in every circumstance. More generally, each number (e.g., first, second, etc.) of the X repetitions used for a particular receiving operation can be zero or more. Furthermore, the numbers of the X repetitions used for the respective receiving operations can be determined adaptively by the HARQ transmitter based on various criteria including, for example: past measurements of signal quality, synchronization quality, and/or interference level; estimate(s) of current signal quality, synchronization quality, and/or interference level; estimate of current UE speed, velocity, location, and/or direction; and elapsed time since a previous HARQ transmission.

In some examples, some or all of the numbers of the X repetitions used for the respective receiving operations can be configured by a network node (e.g., base station, eNB, gNB, etc.). In some examples, some or all of the numbers of the X repetitions used for the respective receiving operations can be pre-configured in the HARQ transmitter, e.g., as part of a specification made by 3GPP or another standard-setting organization (SSO) with which both the HARQ transmitter and the UE receiving the HARQ transmission are compliant.

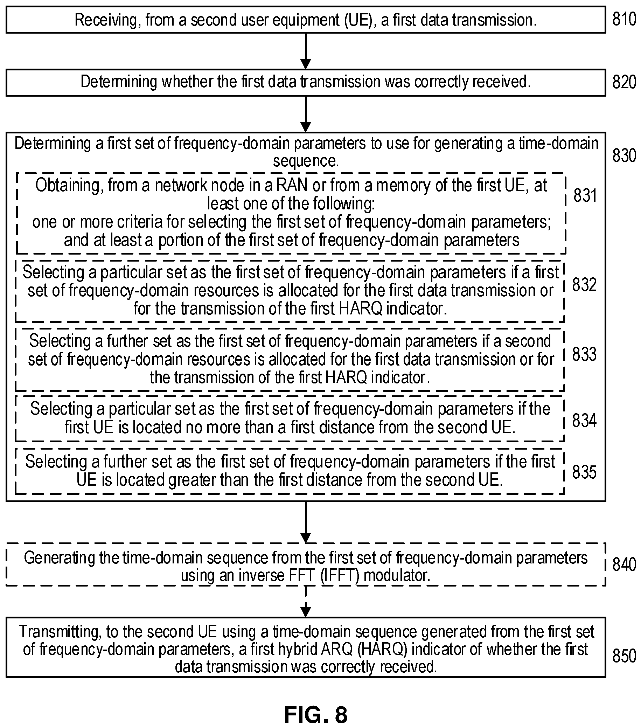

These examples described above can be further illustrated with reference to Figures 8-9, which depict exemplary methods and/or procedures performed by a first UE and a second UE, respectively. Put differently, various features of the operations described below correspond to various examples described above.

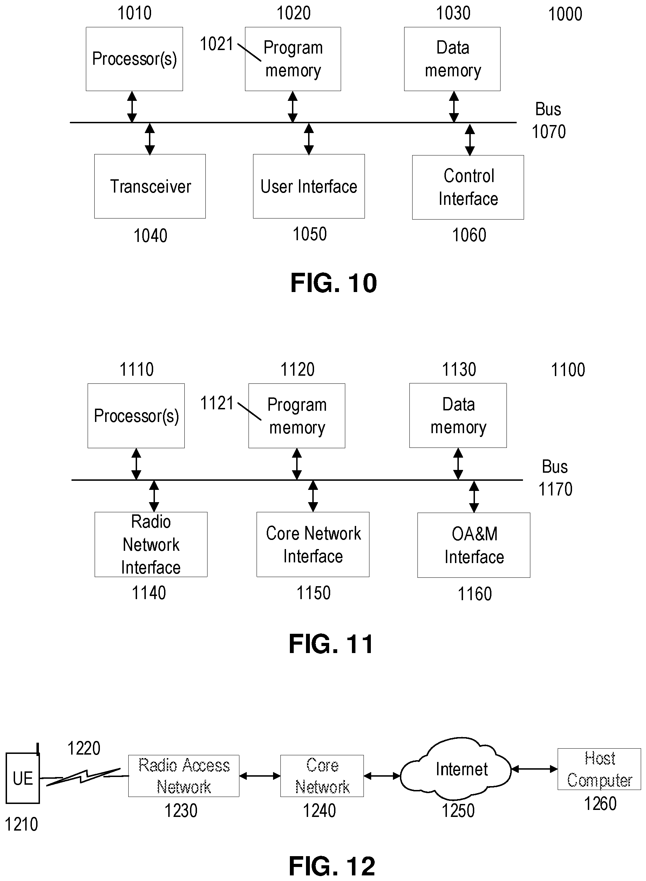

In particular, Figure 8 shows a flow diagram of an exemplary method (e.g., procedure) for receiving device-to-device (D2D) data transmissions from a second user equipment (UE). The exemplary method is performed by a first UE (*e.g*., wireless device, MTC device, NB-IoT device, modem, *etc.* or component thereof) in communication with the second UE and, optionally, a network node (*e.g.,* base station, eNB, gNB, *etc.,* or components thereof) in a radio access network (RAN). For example, the exemplary method shown in Figure 8 is performed by a UE or device configured according to Figure 10 (described below).

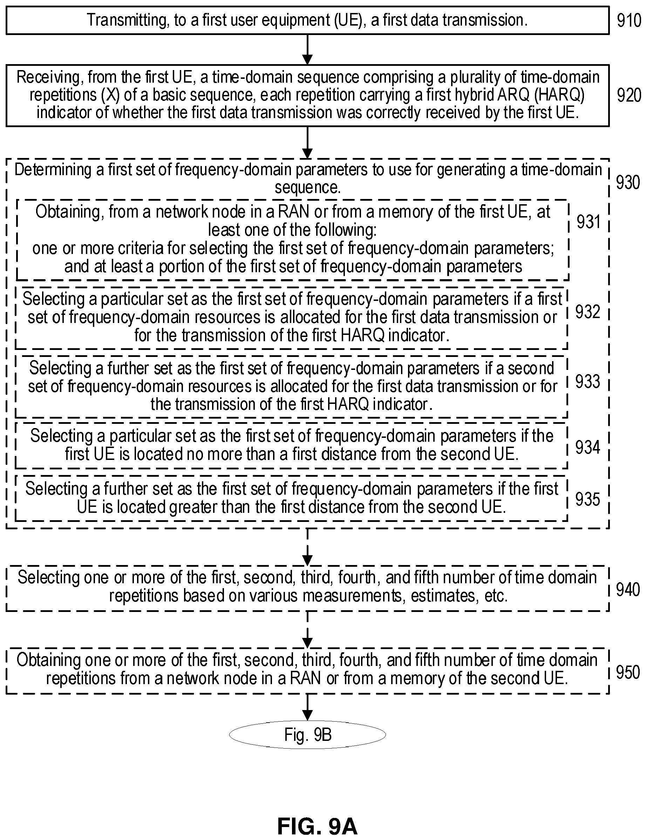

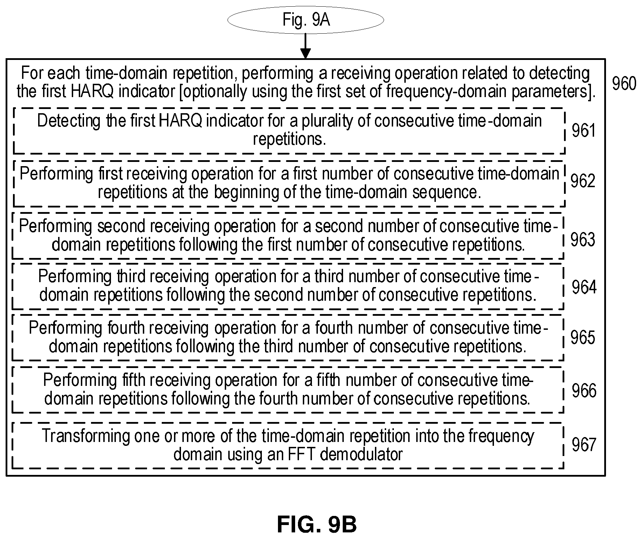

Furthermore, the exemplary method shown in Figure 8 can be utilized cooperatively with other exemplary methods described herein (e.g., Figure 9) to provide various exemplary benefits described herein. Although Figure 8 shows specific blocks in a particular order, the operations of the exemplary method can be performed in a different order than shown and can be combined and/or divided into blocks having different functionality than shown. Optional blocks or operations are indicated by dashed lines.

The exemplary method can include the operations of block 810, where the first UE receives from the second UE, a first data transmission. The exemplary method also includes the operations of block 820, where the first UE determines whether the first data transmission was correctly received. The exemplary method also includes the operations of block 830, where the first UE determines a first set of frequency-domain parameters to use for generating a time-domain sequence. The exemplary method also includes the operations of block 850, where the first UE transmits, to the second UE using a time-domain sequence generated from the first set of frequency-domain parameters, a first hybrid ARQ (HARQ) indicator of whether the first data transmission was correctly received. In some examples, the exemplary method can also include the operations of block 840, where the first UE can generate the time-domain sequence from the first set of frequency-domain parameters using an inverse FFT (IFFT) modulator. This can be done, for example, before the transmitting operations of block 850.

In some examples, the first HARQ indicator can comprise a positive acknowledgement (ACK) if it is determined that the first data transmission was correctly received (e.g., in block 820), or a negative acknowledgement (NACK) if it is determined that the first data transmission was not correctly received.

The first set of frequency-domain parameters includes a basic frequency-domain sequence, a width (X), and an offset (Y). The width (X) indicates a frequency-domain spacing between successive elements of the basic frequency-domain sequence, and the offset (Y) indicates a frequency-domain position of the first element of the basic frequency-domain sequence. In the context of the generating operations of block 840, X can indicate a spacing between IFFT inputs and Y can indicate a starting IFFT input (e.g., as illustrated in Figure 6). The time-domain sequence (e.g., generated in block 840 and used in block 850) also includes X repetitions of the basic frequency-domain sequence (e.g., as illustrated in Figure 7).

The operation of block 830 include the operations of sub-block 831, where the first UE obtains at least one of the following: one or more criteria for selecting the first set of frequency-domain parameters; and at least a portion of the first set of frequency-domain parameters. The first UE obtains such information from a network node in the RAN (e.g., a part of a configuration), and/or from a memory of the first UE (e.g., as preconfigured data). Further, the first data transmission is a groupcast transmission, and the one or more criteria obtained in sub-block 831 include a relation for determining the width (X) as a function of the number of UEs targeted by the first data transmission.

In some examples, the first set of frequency-domain parameters can be determined (e.g., selected) from a plurality of sets of frequency-domain parameters. In such examples, the respective sets are associated with respective basic frequency-domain sequences, with the respective basic frequency-domain sequences being based on a common root sequence that is shifted by respective circular shifts that are unique to each basic frequency-domain sequence. For example, the respective basic frequency-domain sequences can be comb sequences that are orthogonal to each other, with each comb sequence being based on a common root sequence, a common width, a common offset, and a particular circular shift of the root sequence.

In some examples, determining the first set of frequency-domain parameters (e.g., in block 830) can be based on one or more of the following:
- Sidelink control information (SCI) received from the second UE;
- One or more identifiers, with each identifier associated with the first or second UE;
- Frequency-domain resources allocated for the first data transmission or for the transmission of the first HARQ indicator;
- A transmission parameter associated with the first data transmission or with the transmission of the first HARQ indicator;
- Synchronization status of at least one of the first UE and the second UE;
- A relation between a transmission time of the first data transmission and a transmission time of the HARQ indicator;
- At least one of the locations of the first UE and of the second UE; and
- Whether the first data transmission is unicast or groupcast.

In some of these examples, the operations of block 830 can include the operations of sub-blocks 832-833. In sub-block 832, the first UE can select a particular set as the first set of frequency-domain parameters if a first set of frequency-domain resources is allocated for the first data transmission or for the transmission of the first HARQ indicator. In sub-block 833, the first UE can select a further set (i.e., a different set than the particular set selected in sub-block 832) as the first set of frequency-domain parameters if a second set of frequency-domain resources is allocated for the first data transmission or for the transmission of the first HARQ indicator.

In others of these examples, the operations of block 830 can include the operations of sub-blocks 834-835. In sub-block 834, the first UE can select a particular set as the first set of frequency-domain parameters if the first UE is located no more than a first distance from the second UE. In sub-block 835, the first UE can select a further set (i.e., a different set than the particular set selected in sub-block 834) as the first set of frequency-domain parameters if the first UE is located greater than the first distance from the second UE.

In addition, Figure 9 shows a flow diagram of an exemplary method (e.g., procedure) for performing device-to-device (D2D) data transmissions to a first user equipment (UE), according to various examples of the present disclosure. The exemplary method is performed by a second UE (*e.g*., wireless device, MTC device, NB-IoT device, modem, *etc.* or component thereof) in communication with the first UE and, optionally, a network node (*e.g.,* base station, eNB, gNB, *etc.,* or components thereof) in a RAN. For example, the exemplary method shown in Figure 9 is performed by a UE or device configured according to Figure 10 (described below).

Furthermore, the exemplary method shown in Figure 9 can be utilized cooperatively with other exemplary methods described herein (e.g., Figure 8) to provide various exemplary benefits described herein. Although Figure 9 shows specific blocks in a particular order, the operations of the exemplary method can be performed in a different order than shown and can be combined and/or divided into blocks having different functionality than shown. Optional blocks or operations are indicated by dashed lines.

The exemplary method illustrated in Figure 9 includes the operations of block 910, where the second UE transmits, to the first UE, a first data transmission. The exemplary method also includes operation of block 920, where the UE receives, from the first UE, a time-domain sequence comprising a plurality of time-domain repetitions of a basic sequence. Each repetition carries a first hybrid ARQ (HARQ) indicator of whether the first data transmission was correctly received by the first UE. In some examples, the first HARQ indicator can comprise a positive acknowledgement (ACK) if it is determined that the first data transmission (e.g., in block 910) was correctly received, or a negative acknowledgement (NACK) if it is determined that the first data transmission was not correctly received.

The exemplary method also includes operations of block 960, where the second UE, for each time-domain repetition, performs a receiving operation related to detecting the first HARQ indicator. The operations of block 960 include the operations of sub-block 961, where the second UE can detect the first HARQ indicator for a plurality of consecutive time-domain repetitions. In some examples, the operations of block 960 can include the operations of sub-block 967, where the second UE can transform one or more of the time-domain repetitions into the frequency domain using an FFT demodulator.

The exemplary method also includes operations of block 930, where the UE determines a first set of frequency-domain parameters for use during the respective receiving operations for one or more of the time-domain repetitions (e.g., in block 960). The first set of frequency-domain parameters includes a basic frequency-domain sequence, a width (X), and an offset (Y). The width (X) indicates a frequency-domain spacing between successive elements of the basic frequency-domain sequence, and the offset (Y) indicates a frequency-domain position of the first element of the basic frequency-domain sequence.

The operations of block 930 also include the operations of sub-block 931, where the second UE obtains at least one of the following: one or more criteria for selecting the first set of frequency-domain parameters; and at least a portion of the first set of frequency-domain parameters. In particular, the second UE obtains such information from a network node in the RAN (e.g., as part of a configuration), and/or from a memory of the second UE (e.g., as preconfigured data).

In some examples, the first set of frequency-domain parameters can be determined (e.g., selected) from a plurality of sets of frequency-domain parameters. In such examples, the respective sets are associated with respective basic frequency-domain sequences, with the respective basic frequency-domain sequences being based on a common root sequence that is shifted by respective circular shifts that are unique to each basic frequency-domain sequence. For example, the respective basics sequences can be comb sequences that are orthogonal to each other, with each comb sequence being based on a common root sequence, a common width, a common offset, and a particular circular shift of the root sequence.

In some examples, determining first set of frequency-domain parameters (e.g., in block 930) can be based on one or more of the following:
- Sidelink control information (SCI) sent to the first UE;
- One or more identifiers, with each identifier associated with the first or second UE;
- Frequency-domain resources allocated for the first data transmission or for the transmission of the first HARQ indicator;
- A transmission parameter associated with the first data transmission or with the transmission of the first HARQ indicator;
- Synchronization status of at least one of the first UE and the second UE;
- A relation between a transmission time of the first data transmission and a transmission time of the HARQ indicator;
- At least one of the locations of the first UE and of the second UE; and
- Whether the first data transmission is unicast or groupcast.

In some of these examples, the operations of block 930 can include the operations of sub-blocks 932-933. In sub-block 932, the second UE can select a particular set as the first set of frequency-domain parameters if a first set of frequency-domain resources is allocated for the first data transmission or for the transmission of the first HARQ indicator. In sub-block 933, the second UE can select a further set (i.e., a different set than the particular set selected in sub-block 932) as the first set of frequency-domain parameters if a second set of frequency-domain resources is allocated for the first data transmission or for the transmission of the first HARQ indicator.

In others of these examples, the operations of block 930 can include the operations of sub-blocks 934-935. In sub-block 934, the second UE can select a particular set as the first set of frequency-domain parameters if the first UE is located no more than a first distance from the second UE. In sub-block 935, the second UE can select a further set (i.e., a different set than the particular set selected in sub-block 934) as the first set of frequency-domain parameters if the first UE is located greater than the first distance from the second UE.

The receiving operation, performed for each time-domain repetition, is one of a plurality of receiving operations that include:
- A first receiving operation comprising switching from transmit mode to receive mode;
- A second receiving operation comprising training an automatic gain control (AGC) loop;
- A third receiving operation comprising estimating the radio channel between the second UE and the first UE;
- A fourth receiving operation comprising detecting the first HARQ indicator; and
- A fifth receiving operation comprising switching from receive mode to transmit mode.

In particular, performing (960) a receiving operation for each time-domain repetition (in block 960) includes the following operations and/or sub-blocks:
- In sub-block 962, performing the first receiving operation for a first number of consecutive time-domain repetitions at the beginning of the time-domain signal;
- In sub-block 963, performing the second receiving operation for a second number of consecutive time-domain repetitions following the first number of consecutive time-domain repetitions;
- In sub-block 964, performing the third receiving operation for a third number of consecutive time-domain repetitions following the second number of consecutive time-domain repetitions; and
- In sub-block 965, performing the fourth receiving operation for a fourth number of consecutive time-domain repetitions following the third number of consecutive time-domain repetitions; and
- In sub-block 966, performing the fifth receiving operation for a fifth number of consecutive time-domain repetitions following the fourth number of consecutive time-domain repetitions.

Figure 7 illustrates an exemplary arrangement in which the first through fifth receiving operations are performed according to these examples.

However, in some examples, at least one of the first number, the second number, the third number, and the fifth number can be zero, such that the second UE does not perform at least one of the first, second, third, and fifth receiving operations.

In some embodiments, the exemplary method can include the operations of block 940, where the second UE can select one or more of the first number, the second number, the third number, the fourth number, and the fifth number based on any of the following:
- Past measurements of signal quality, synchronization quality, and/or interference level;
- Estimates of current signal quality, synchronization quality, and/or interference level;
- Estimates of current UE speed, velocity, location, and/or direction; and
- Elapsed time since a previous HARQ transmission received from the first UE.

In other examples, the method can include the operations of block 950, where the second UE can obtain one or more of the first number, the second number, the third number, the fourth number, and the fifth number from any of the following: a network node in the RAN (e.g., as part of a configuration), and/or from a memory of the second UE (e.g., as preconfigured data).

Although various examples are described herein above in terms of methods, apparatus, devices, computer-readable medium and receivers, the person of ordinary skill will readily comprehend that such methods can be embodied by various combinations of hardware and software in various systems, communication devices, computing devices, control devices, apparatuses, non-transitory computer-readable media, *etc.*

Figure 10 shows a block diagram of an exemplary wireless device or user equipment (UE) 1000 (hereinafter referred to as "UE 1000") according to various examples of the present disclosure, including those described above with reference to other figures. For example, UE 1000 can be configured by execution of instructions, stored on a computer-readable medium, to perform operations corresponding to one or more of the exemplary methods and/or procedures described above.

UE 1000 can include a processor 1010 (also referred to as "processing circuitry") that can be operably connected to a program memory 1020 and/or a data memory 1030 via a bus 1070 that can comprise parallel address and data buses, serial ports, or other methods and/or structures known to those of ordinary skill in the art. Program memory 1020 can store software code, programs, and/or instructions (collectively shown as computer program product 1021 in Figure 10) that, when executed by processor 1010, can configure and/or facilitate UE 1000 to perform various operations, including operations described below. For example, execution of such instructions can configure and/or facilitate UE 1000 to communicate using one or more wired or wireless communication protocols, including one or more wireless communication protocols standardized by 3GPP, 3GPP2, or IEEE, such as those commonly known as 5G/NR, LTE, LTE-A, UMTS, HSPA, GSM, GPRS, EDGE, 1xRTT, CDMA2000, 802.11 WiFi, HDMI, USB, Firewire, *etc.,* or any other current or future protocols that can be utilized in conjunction with radio transceiver 1040, user interface 1050, and/or host interface 1060.

As another example, processor 1010 can execute program code stored in program memory 1020 that corresponds to MAC, RLC, PDCP, and RRC layer protocols standardized by 3GPP (*e.g.,* for NR and/or LTE). As a further example, processor 1010 can execute program code stored in program memory 1020 that, together with radio transceiver 1040, implements corresponding PHY layer protocols, such as Orthogonal Frequency Division Multiplexing (OFDM), Orthogonal Frequency Division Multiple Access (OFDMA), and Single-Carrier Frequency Division Multiple Access (SC-FDMA). As another example, processor 1010 can execute program code stored in program memory 1020 that, together with radio transceiver 1040, implements device-to-device (D2D) communications with other compatible devices and/or UEs.

Program memory 1020 can also include software code executed by processor 1010 to control the functions of UE 1000, including configuring and controlling various components such as radio transceiver 1040, user interface 1050, and/or host interface 1060. Program memory 1020 can also comprise one or more application programs and/or modules comprising computer-executable instructions embodying any of the exemplary methods and/or procedures described herein. Such software code can be specified or written using any known or future developed programming language, such as *e.g.,* Java, C++, C, Objective C, HTML, XHTML, machine code, and Assembler, as long as the desired functionality, *e.g.,* as defined by the implemented method steps, is preserved. In addition, or as an alternative, program memory 1020 can comprise an external storage arrangement (not shown) remote from UE 1000, from which the instructions can be downloaded into program memory 1020 located within or removably coupled to UE 1000, so as to enable execution of such instructions.

Data memory 1030 can include memory area for processor 1010 to store variables used in protocols, configuration, control, and other functions of UE 1000, including operations corresponding to, or comprising, any of the exemplary methods and/or procedures described herein. Moreover, program memory 1020 and/or data memory 1030 can include non-volatile memory (*e.g.,* flash memory), volatile memory (*e.g.,* static or dynamic RAM), or a combination thereof. Furthermore, data memory 1030 can comprise a memory slot by which removable memory cards in one or more formats (e.g., SD Card, Memory Stick, Compact Flash, *etc.*) can be inserted and removed.

Persons of ordinary skill will recognize that processor 1010 can include multiple individual processors (including, *e.g.,* multi-core processors), each of which implements a portion of the functionality described above. In such cases, multiple individual processors can be commonly connected to program memory 1020 and data memory 1030 or individually connected to multiple individual program memories and or data memories. More generally, persons of ordinary skill in the art will recognize that various protocols and other functions of UE 1000 can be implemented in many different computer arrangements comprising different combinations of hardware and software including, but not limited to, application processors, signal processors, general-purpose processors, multi-core processors, ASICs, fixed and/or programmable digital circuitry, analog baseband circuitry, radio-frequency circuitry, software, firmware, and middleware.

Radio transceiver 1040 can include radio-frequency transmitter and/or receiver functionality that facilitates the UE 1000 to communicate with other equipment supporting like wireless communication standards and/or protocols. In some examples, the radio transceiver 1040 includes one or more transmitters and one or more receivers that enable UE 1000 to communicate according to various protocols and/or methods proposed for standardization by 3GPP and/or other standards bodies. For example, such functionality can operate cooperatively with processor 1010 to implement a PHY layer based on OFDM, OFDMA, and/or SC-FDMA technologies, such as described herein with respect to other figures.

In some examples, radio transceiver 1040 includes one or more transmitters and one or more receivers that can facilitate the UE 1000 to communicate with various LTE, LTE-Advanced (LTE-A), and/or NR networks according to standards promulgated by 3GPP. In some examples of the present disclosure, the radio transceiver 1040 includes circuitry, firmware, *etc.* necessary for the UE 1000 to communicate with various NR, NR-U, LTE, LTE-A, LTE-LAA, UMTS, and/or GSM/EDGE networks, also according to 3GPP standards. In some examples, radio transceiver 1040 can include circuitry supporting D2D communications between UE 1000 and other compatible devices.

In some examples, radio transceiver 1040 includes circuitry, firmware, *etc.* necessary for the UE 1000 to communicate with various CDMA2000 networks, according to 3GPP2 standards. In some examples, the radio transceiver 1040 can be capable of communicating using radio technologies that operate in unlicensed frequency bands, such as IEEE 802.11 WiFi that operates using frequencies in the regions of 2.4, 5.6, and/or 60 GHz. In some examples, radio transceiver 1040 can include a transceiver that is capable of wired communication, such as by using IEEE 802.3 Ethernet technology. The functionality particular to each of these examples can be coupled with and/or controlled by other circuitry in the UE 1000, such as the processor 1010 executing program code stored in program memory 1020 in conjunction with, and/or supported by, data memory 1030.

User interface 1050 can take various forms depending on the particular example of UE 1000, or can be absent from UE 1000 entirely. In some examples, user interface 1050 can comprise a microphone, a loudspeaker, slidable buttons, depressible buttons, a display, a touchscreen display, a mechanical or virtual keypad, a mechanical or virtual keyboard, and/or any other user-interface features commonly found on mobile phones. In other examples, the UE 1000 can comprise a tablet computing device including a larger touchscreen display. In such examples, one or more of the mechanical features of the user interface 1050 can be replaced by comparable or functionally equivalent virtual user interface features (*e.g.,* virtual keypad, virtual buttons, *etc.*) implemented using the touchscreen display, as familiar to persons of ordinary skill in the art. In other examples, the UE 1000 can be a digital computing device, such as a laptop computer, desktop computer, workstation, *etc.* that comprises a mechanical keyboard that can be integrated, detached, or detachable depending on the particular example.

Such a digital computing device can also comprise a touch screen display. Many examples of the UE 1000 having a touch screen display are capable of receiving user inputs, such as inputs related to exemplary methods and/or procedures described herein or otherwise known to persons of ordinary skill in the art.

In some examples, UE 1000 can include an orientation sensor, which can be used in various ways by features and functions of UE 1000. For example, the UE 1000 can use outputs of the orientation sensor to determine when a user has changed the physical orientation of the UE 1000's touch screen display. An indication signal from the orientation sensor can be available to any application program executing on the UE 1000, such that an application program can change the orientation of a screen display (*e.g*., from portrait to landscape) automatically when the indication signal indicates an approximate 100-degree change in physical orientation of the device. In this exemplary manner, the application program can maintain the screen display in a manner that is readable by the user, regardless of the physical orientation of the device. In addition, the output of the orientation sensor can be used in conjunction with various examples of the present disclosure.

A control interface 1060 of the UE 1000 can take various forms depending on the particular example of UE 1000 and of the particular interface requirements of other devices that the UE 1000 is intended to communicate with and/or control. For example, the control interface 1060 can comprise an RS-232 interface, an RS-4105 interface, a USB interface, an HDMI interface, a Bluetooth interface, an IEEE ("Firewire") interface, an I²C interface, a PCMCIA interface, or the like. In some examples of the present disclosure, control interface 1060 can comprise an IEEE 802.3 Ethernet interface such as described above. In some examples of the present disclosure, the control interface 1060 can comprise analog interface circuitry including, for example, one or more digital-to-analog (D/A) and/or analog-to-digital (A/D) converters.

Persons of ordinary skill in the art can recognize the above list of features, interfaces, and radio-frequency communication standards is merely exemplary, and not limiting to the scope of the present disclosure. In other words, the UE 1000 can comprise more functionality than is shown in Figure 10 including, for example, a video and/or still-image camera, microphone, media player and/or recorder, *etc.* Moreover, radio transceiver 1040 can include circuitry necessary to communicate using additional radio-frequency communication standards including Bluetooth, GPS, and/or others. Moreover, the processor 1010 can execute software code stored in the program memory 1020 to control such additional functionality. For example, directional velocity and/or position estimates output from a GPS receiver can be available to any application program executing on the UE 1000, including various exemplary methods and/or computer-readable media according to various examples of the present disclosure.

Figure 11 shows a block diagram of an exemplary network node 1100 according to various examples of the present disclosure, including those described above with reference to other figures. For example, exemplary network node 1100 can be configured by execution of instructions, stored on a computer-readable medium, to perform operations corresponding to one or more of the exemplary methods and/or procedures described above. In some examples, network node 1100 can comprise a base station, eNB, gNB, or one or more components thereof. For example, network node 1100 can be configured as a central unit (CU) and one or more distributed units (DUs) according to NR gNB architectures specified by 3GPP. More generally, the functionally of network node 1100 can be distributed across various physical devices and/or functional units, modules, etc.

Network node 1100 can include processor 1110 (also referred to as "processing circuitry") that is operably connected to program memory 1120 and data memory 1130 via bus 1170, which can include parallel address and data buses, serial ports, or other methods and/or structures known to those of ordinary skill in the art.

Program memory 1120 can store software code, programs, and/or instructions (collectively shown as computer program product 1121 in Figure 11) that, when executed by processor 1110, can configure and/or facilitate network node 1100 to perform various operations. For example, execution of such stored instructions can configure network node 1100 to communicate with one or more other devices using protocols according to various examples of the present disclosure, including one or more exemplary methods and/or procedures discussed above. Program memory 1120 can also comprise software code executed by processor 1110 that can facilitate and specifically configure network node 1100 to communicate with one or more other devices using other protocols or protocol layers, such as one or more of the PHY, MAC, RLC, PDCP, and RRC layer protocols standardized by 3GPP for LTE, LTE-A, and/or NR, or any other higher-layer protocols utilized in conjunction with radio network interface 1140 and core network interface 1150. By way of example and without limitation, core network interface 1150 can comprise the S1 interface and radio network interface 1150 can comprise the Uu interface, as standardized by 3GPP. Program memory 1120 can further comprise software code executed by processor 1110 to control the functions of network node 1100, including configuring and controlling various components such as radio network interface 1140 and core network interface 1150.

Data memory 1130 can comprise memory area for processor 1110 to store variables used in protocols, configuration, control, and other functions of network node 1100. As such, program memory 1120 and data memory 1130 can comprise non-volatile memory (*e.g.,* flash memory, hard disk, *etc.*)*,* volatile memory (*e.g.,* static or dynamic RAM), network-based (*e.g.,* "cloud") storage, or a combination thereof. Persons of ordinary skill in the art will recognize that processor 1110 can include multiple individual processors (not shown), each of which implements a portion of the functionality described above. In such case, multiple individual processors may be commonly connected to program memory 1120 and data memory 1130 or individually connected to multiple individual program memories and/or data memories. More generally, persons of ordinary skill will recognize that various protocols and other functions of network node 1100 may be implemented in many different combinations of hardware and software including, but not limited to, application processors, signal processors, general-purpose processors, multi-core processors, ASICs, fixed digital circuitry, programmable digital circuitry, analog baseband circuitry, radio-frequency circuitry, software, firmware, and middleware.

Radio network interface 1140 can comprise transmitters, receivers, signal processors, ASICs, antennas, beamforming units, and other circuitry that enables network node 1100 to communicate with other equipment such as, in some examples, a plurality of compatible user equipment (UE). In some examples, interface 1140 can also enable network node 1100 to communicate with compatible satellites of a satellite communication network. In some examples, radio network interface 1140 can comprise various protocols or protocol layers, such as the PHY, MAC, RLC, PDCP, and/or RRC layer protocols standardized by 3GPP for LTE, LTE-A, LTE-LAA, NR, NR-U, etc.; improvements thereto such as described herein above; or any other higher-layer protocols utilized in conjunction with radio network interface 1140. According to further examples of the present disclosure, the radio network interface 1140 can comprise a PHY layer based on OFDM, OFDMA, and/or SC-FDMA technologies. In some examples, the functionality of such a PHY layer can be provided cooperatively by radio network interface 1140 and processor 1110 (including program code in memory 1120).

Core network interface 1150 can comprise transmitters, receivers, and other circuitry that enables network node 1100 to communicate with other equipment in a core network such as, in some examples, circuit-switched (CS) and/or packet-switched Core (PS) networks. In some examples, core network interface 1150 can comprise the S1 interface standardized by 3GPP. In some examples, core network interface 1150 can comprise the NG interface standardized by 3GPP. In some examples, core network interface 1150 can comprise one or more interfaces to one or more AMFs, SMFs, SGWs, MMEs, SGSNs, GGSNs, and other physical devices that comprise functionality found in GERAN, UTRAN, EPC, 5GC, and CDMA2000 core networks that are known to persons of ordinary skill in the art. In some examples, these one or more interfaces may be multiplexed together on a single physical interface. In some examples, lower layers of core network interface 1150 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art.

OA&M interface 1160 can comprise transmitters, receivers, and other circuitry that enables network node 1100 to communicate with external networks, computers, databases, and the like for purposes of operations, administration, and maintenance of network node 1100 or other network equipment operably connected thereto. Lower layers of OA&M interface 1160 can comprise one or more of asynchronous transfer mode (ATM), Internet Protocol (IP)-over-Ethernet, SDH over optical fiber, T1/E1/PDH over a copper wire, microwave radio, or other wired or wireless transmission technologies known to those of ordinary skill in the art. Moreover, in some examples, one or more of radio network interface 1140, core network interface 1150, and OA&M interface 1160 may be multiplexed together on a single physical interface, such as the examples listed above.

Figure 12 is a block diagram of an exemplary communication network configured to provide over-the-top (OTT) data services between a host computer and a user equipment (UE), according to one or more examples of the present disclosure. UE 1210 can communicate with radio access network (RAN) 1230 over radio interface 1220, which can be based on protocols described above including, e.g., LTE, LTE-A, and 5G/NR. For example, UE 1210 can be configured and/or arranged as shown in other figures discussed above. RAN 1230 can include one or more terrestrial network nodes (*e.g*., base stations, eNBs, gNBs, controllers, *etc*.) operable in licensed spectrum bands, as well one or more network nodes operable in unlicensed spectrum (using, e.g., LAA or NR-U technology), such as a 2.4-GHz band and/or a 5-GHz band. In such cases, the network nodes comprising RAN 1230 can cooperatively operate using licensed and unlicensed spectrum. In some examples,

RAN 1230 can include, or be capable of communication with, one or more satellites comprising a satellite access network.

RAN 1230 can further communicate with core network 1240 according to various protocols and interfaces described above. For example, one or more apparatus (e.g., base stations, eNBs, gNBs, *etc*.) comprising RAN 1230 can communicate to core network 1240 via core network interface 1250 described above. In some examples, RAN 1230 and core network 1240 can be configured and/or arranged as shown in other figures discussed above. For example, eNBs comprising an E-UTRAN 1230 can communicate with an EPC core network 1240 via an S1 interface, such as shown in Figure 1. As another example, gNBs comprising a NR RAN 1230 can communicate with a 5GC core network 1230 via an NG interface.

Core network 1240 can further communicate with an external packet data network, illustrated in Figure 12 as Internet 1250, according to various protocols and interfaces known to persons of ordinary skill in the art. Many other devices and/or networks can also connect to and communicate via Internet 1250, such as exemplary host computer 1260. In some examples, host computer 1260 can communicate with UE 1210 using Internet 1250, core network 1240, and RAN 1230 as intermediaries. Host computer 1260 can be a server (e.g., an application server) under ownership and/or control of a service provider. Host computer 1260 can be operated by the OTT service provider or by another entity on the service provider's behalf.

For example, host computer 1260 can provide an over-the-top (OTT) packet data service to UE 1210 using facilities of core network 1240 and RAN 1230, which can be unaware of the routing of an outgoing/incoming communication to/from host computer 1260. Similarly, host computer 1260 can be unaware of routing of a transmission from the host computer to the UE, *e.g.,* the routing of the transmission through RAN 1230. Various OTT services can be provided using the exemplary configuration shown in Figure 12 including, e.g., streaming (unidirectional) audio and/or video from host computer to UE, interactive (bidirectional) audio and/or video between host computer and UE, interactive messaging or social communication, interactive virtual or augmented reality, *etc.*

The exemplary network shown in Figure 12 can also include measurement procedures and/or sensors that monitor network performance metrics including data rate, latency and other factors that are improved by examples disclosed herein. The exemplary network can also include functionality for reconfiguring the link between the endpoints (e.g., host computer and UE) in response to variations in the measurement results. Such procedures and functionalities are known and practiced; if the network hides or abstracts the radio interface from the OTT service provider, measurements can be facilitated by proprietary signaling between the UE and the host computer.

The examples described herein provide efficient techniques for RAN 1230 operation in conjunction with device-to-device (D2D) or "sidelink" communications, such as by configuring UEs - such as UE 1210 - in communication to perform HARQ indicators (e.g., ACK/NACK) in response to groupcast, multicast, and/or broadcast D2D data transmissions. For example, by enabling various UEs in a group to provide distinguishable HARQ indicators with respect to the same data transmission, such techniques can enable more reliable groupcast, multicast, and/or broadcast D2D data transmissions. When used in LTE or NR UEs (*e.g*., UE 1210) and eNBs or gNBs (*e.g*., gNBs comprising RAN 1230), examples described herein can provide various improvements, benefits, and/or advantages to OTT service providers and end-users, including more consistent data throughout and fewer delays without excessive UE power consumption or other reductions in user experience.

The foregoing merely illustrates the principles of the disclosure. Various modifications and alterations to the described examples will be apparent to those skilled in the art in view of the teachings herein. It will thus be appreciated that those skilled in the art will be able to devise numerous systems, arrangements, and procedures that, although not explicitly shown or described herein, embody the principles of the disclosure and can be thus within the scope of the disclosure. Various exemplary examples can be used together with one another, as well as interchangeably therewith, as should be understood by those having ordinary skill in the art.

The term unit, as used herein, can have conventional meaning in the field of electronics, electrical devices and/or electronic devices and can include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more examples of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification, drawings and examples thereof, can be used synonymously in certain instances, including, but not limited to, *e.g.,* data and information. It should be understood that, while these words and/or other words that can be synonymous to one another, can be used synonymously herein, that there can be instances when such words can be intended to not be used synonymously.

## Claims

1. A method performed by a first user equipment, UE, to receive device-to-device, D2D, data transmissions from a second UE, the method comprising:
receiving (810), from the second UE, a first data transmission;
determining (820) whether the first data transmission was correctly received;
determining (830) a first set of frequency-domain parameters to use for generating a time-domain sequence; and
transmitting (850), to the second UE using a time-domain sequence generated from the first set of frequency-domain parameters and comprising a plurality of time-domain repetitions of the basic frequency-domain sequence, each repetition carrying first hybrid ARQ, HARQ, indicator of whether the first data transmission was correctly received;
wherein the first set of frequency-domain parameters includes the following: the basic frequency-domain sequence; a width, X indicating a frequency-domain spacing between successive elements of the basic frequency-domain sequence; and an offset, Y indicating a frequency-domain position of the first element of the basic frequency-domain sequence;
wherein determining (830) the first set of frequency-domain parameters comprises obtaining (831), from a network node in a radio access network, RAN, or from a memory of the first UE, one or more criteria for selecting the first set of frequency-domain parameters;
wherein the first data transmission is a groupcast transmission; and the one or more criteria include a relation for determining X as a function of the number of UEs targeted by the first data transmission.

2. The method of claim 1, further comprising generating (840) the time-domain sequence from the first set of frequency-domain parameters using an inverse FFT, IFFT, modulator, wherein X indicates a spacing between IFFT inputs and Y indicates a starting IFFT input.

3. The method of any of claims 1-2, wherein determining (830) the first set of frequency-domain parameters is based on one or more of the following:
sidelink control information, SCI, received from the second UE;
one or more identifiers, each identifier associated with the first UE or with the second UE;
frequency-domain resources allocated for the first data transmission or for the transmission of the first HARQ indicator;
a transmission parameter associated with the first data transmission or with the transmission of the first HARQ indicator;
synchronization status of at least one of the first UE and the second UE;
a relation between a transmission time of the first data transmission and a transmission time of the first HARQ indicator;
at least one of the locations of the first UE and of the second UE.

4. The method of claim 3, wherein determining (830) the first set of frequency-domain parameters comprises:
selecting (832) a particular set as the first set of frequency-domain parameters if a first set of frequency-domain resources is allocated for the first data transmission or for the transmission of the first HARQ indicator; and
selecting (833) a further set as the first set of frequency-domain parameters if a second set of frequency-domain resources is allocated for the first data transmission or for the transmission of the first HARQ indicator.

5. The method of claim 3, wherein determining (830) the first set of frequency-domain parameters comprises:
selecting (834) a particular set as the first set of frequency-domain parameters if the first UE is located no more than a first distance from the second UE; and
selecting (835) a further set as the first set of frequency-domain parameters if the first UE is located greater than the first distance from the second UE.

6. A method performed by a second user equipment, UE), to perform device-to-device, D2D, data transmissions to a first UE, the method comprising:
transmitting (910), to the first UE, a first data transmission;
receiving (920), from the first UE, a time-domain sequence comprising a plurality of time-domain repetitions of a basic sequence, each repetition carrying a first hybrid ARQ, HARQ, indicator of whether the first data transmission was correctly received by the first UE;
determining (930) a first set of frequency-domain parameters for use during the respective receiving operations for one or more of the time-domain repetitions; and
for each time-domain repetition, performing (960) a receiving operation related to detecting the first HARQ indicator;
wherein the first set of frequency-domain parameters includes the following: a basic frequency-domain sequence; a width, X; and an offset, Y;
X indicates a frequency-domain spacing between successive elements of the basic frequency-domain sequence;
and Y indicates a frequency-domain position of the first element of the basic frequency-domain sequence;
wherein determining (930) the first set of frequency-domain parameters comprises obtaining (931), from a network node in a radio access network, RAN, or from a memory of the second UE, one or more criteria for selecting the first set of frequency-domain parameters;
wherein the first data transmission is a groupcast transmission;
and the one or more criteria include a relation for determining X as a function of the number of UEs targeted by the first data transmission; and
wherein performing (960) a receiving operation for each time-domain repetition comprises:
performing (962) a first receiving operation for a first number of consecutive time-domain repetitions at the beginning of the time-domain sequence, the first receiving operation comprising switching from transmit mode to receive mode;
performing (963) a second receiving operation for a second number of consecutive time-domain repetitions following the first number of consecutive time-domain repetitions, the second receiving operation comprising training an automatic gain control, AGC, loop;
performing (964) a third receiving operation for a third number of consecutive time-domain repetitions following the second number of consecutive time-domain repetitions, the third receiving operation comprising estimating the radio channel between the second UE and the first UE;
performing (965) a fourth receiving operation for a fourth number of consecutive time-domain repetitions following the third number of consecutive time-domain repetitions, the fourth receiving operation comprising detecting the first HARQ indicator; and
performing (966) a fifth receiving operation for a fifth number of consecutive time-domain repetitions following the fourth number of consecutive time-domain repetitions, the fifth receiving operation comprising switching from receive mode to transmit mode.

7. The method of claim 6, wherein at least one of the first number, the second number, the third number, and the fifth number is zero.

8. The method of claim 6, further comprising selecting (940) one or more of the first number, the second number, the third number, the fourth number, and the fifth number based on any of the following:
past measurements of signal quality, synchronization quality, and/or interference level;
estimates of current signal quality, synchronization quality, and/or interference level;
estimates of current UE speed, velocity, location, and/or direction; and
elapsed time since a previous HARQ transmission received from the first UE.

9. The method of any of claims 6-8, wherein for one or more of the time-domain repetitions, performing (960) the receiving operation comprises transforming (967) the time-domain repetition into the frequency domain using an FFT demodulator.

10. The method of any of claims 6-9, wherein:
the first set of frequency-domain parameters is selected from a plurality of sets of frequency-domain parameters; and
the respective sets are associated with respective basic frequency-domain sequences; and
the respective basic frequency-domain sequences are based on a common root sequence that is shifted by respective circular shifts that are unique to each basic frequency-domain sequence.

11. The method of any of claims 6-10, wherein determining (930) the first set of frequency-domain parameters is based on one or more of the following:
sidelink control information, SCI, sent to the first UE;
one or more identifiers, each identifier associated with the first UE or with the second UE;
frequency-domain resources allocated for the first data transmission or for the transmission of the first HARQ indicator;
a transmission parameter associated with the first data transmission or with the transmission of the first HARQ indicator;
synchronization status of at least one of the first UE and the second UE;
a relation between a transmission time of the first data transmission and a transmission time of the first HARQ indicator;
at least one of the locations of the first UE and of the second UE.

12. The method of claim 11, wherein determining (930) the first set of frequency-domain parameters comprises:
selecting (932) a particular set as the first set of frequency-domain parameters if a first set of frequency-domain resources is allocated for the first data transmission or for the transmission of the first HARQ indicator; and
selecting (933) a further set as the first set of frequency-domain parameters if a second set of frequency-domain resources is allocated for the first data transmission or for the transmission of the first HARQ indicator.

13. The method of claim 11, wherein determining (930) the first set of frequency-domain parameters comprises:
selecting (934) a particular set as the first set of frequency-domain parameters if the first UE is located no more than a first distance from the second UE; and
selecting (935) a further set as the first set of frequency-domain parameters if the first UE is located greater than the first distance from the second UE.

14. A user equipment, LTE (120, 430-360, 1000) configured to perform device-to-device, D2D, data transmissions with another UE (120, 430-360, 1000), the UE being further arranged to perform operations corresponding to any of the methods of claims 1-5 or claims 6-13.

## Patentansprüche

1. Verfahren, das von einer ersten Benutzereinrichtung, UE, durchgeführt wird, zum Empfangen von Vorrichtung-zu-Vorrichtung-,D2D-,Datenübertragungen von einer zweiten UE, wobei das Verfahren umfasst:
Empfangen (810) einer ersten Datenübertragung von der zweiten UE;
Bestimmen (820), ob die erste Datenübertragung korrekt empfangen wurde;
Bestimmen (830) eines ersten Satzes von Frequenzdomänenparametern zur Verwendung zum Erzeugen einer Zeitdomänensequenz; und
Senden (850) jeder Wiederholung, die einen ersten Hybrid-ARQ-,HARQ-,Indikator dessen überträgt, ob die erste Datenübertragung korrekt empfangen wurde, unter Verwendung einer Zeitdomänensequenz, die aus dem ersten Satz von Frequenzdomänenparametern erzeugt wurde und eine Mehrzahl von Zeitdomänenwiederholungen der Basis-Frequenzdomänensequenz umfasst, an die zweite UE;
wobei der erste Satz von Frequenzdomänenparametern Folgendes umfasst: die Basis-Frequenzdomänensequenz; eine Breite X, die einen Frequenzdomänenabstand zwischen aufeinanderfolgenden Elementen der Basis-Frequenzdomänensequenz anzeigt; und einen Versatz Y, der eine Frequenzdomänenposition des ersten Elements der Basis-Frequenzdomänensequenz anzeigt;
wobei das Bestimmen (830) des ersten Satzes von Frequenzdomänenparametern ein Erhalten (831) eines oder mehrerer Kriterien zum Auswählen des ersten Satzes von Frequenzdomänenparametern von einem Netzwerkknoten in einem Funkzugangsnetzwerk, RAN, oder aus einem Speicher der ersten UE umfasst;
wobei die erste Datenübertragung eine Groupcast-Übertragung ist; und das eine oder die mehreren Kriterien eine Beziehung zum Bestimmen von X in Abhängigkeit von der Anzahl von UEs umfassen, für die die erste Datenübertragung bestimmt ist.

2. Verfahren nach Anspruch 1, ferner umfassend ein Erzeugen (840) der Zeitdomänensequenz aus dem ersten Satz von Frequenzdomänenparametern unter Verwendung eines Inverse-FFT-,IFFT-,Modulators, wobei X einen Abstand zwischen IFFT-Eingaben anzeigt, und Y eine Start-IFFT-Eingabe anzeigt.

3. Verfahren nach einem der Ansprüche 1 bis 2, wobei das Bestimmen (830) des ersten Satzes von Frequenzdomänenparametern auf mindestens einem von Folgenden basiert:
Sidelink-Steuerinformationen, SCI, die von der zweiten UE empfangen werden;
einer oder mehreren Kennungen, wobei jede Kennung mit der ersten UE oder mit der zweiten UE assoziiert ist;
Frequenzdomänenressourcen, die für die erste Datenübertragung oder für die Übertragung des ersten HARQ-Indikators zugewiesen sind;
einem Übertragungsparameter, der mit der ersten Datenübertragung oder mit der Übertragung des ersten HARQ-Indikators assoziiert ist;
einem Synchronisationsstatus mindestens einer der ersten UE und der zweiten UE;
einer Beziehung zwischen einer Übertragungszeit der ersten Datenübertragung und einer Übertragungszeit des ersten HARQ-Indikators;
mindestens einem der Standorte der ersten UE und der zweiten UE.

4. Verfahren nach Anspruch 3, wobei das Bestimmen (830) des ersten Satzes von Frequenzdomänenparametern umfasst:
Auswählen (832) eines spezifischen Satzes als den ersten Satz von Frequenzdomänenparametern, falls ein erster Satz von Frequenzdomänenressourcen für die erste Datenübertragung oder für die Übertragung des ersten HARQ-Indikators zugewiesen ist; und
Auswählen (833) eines weiteren Satzes als den ersten Satz von Frequenzdomänenparametern, falls ein zweiter Satz von Frequenzdomänenressourcen für die erste Datenübertragung oder für die Übertragung des ersten HARQ-Indikators zugewiesen ist.

5. Verfahren nach Anspruch 3, wobei das Bestimmen (830) des ersten Satzes von Frequenzdomänenparametern umfasst:
Auswählen (834) eines spezifischen Satzes als den ersten Satz von Frequenzdomänenparametern, falls die erste UE nicht weiter als einen ersten Abstand von der zweiten UE angeordnet ist; und
Auswählen (835) eines weiteren Satzes als den ersten Satz von Frequenzdomänenparametern, falls die erste UE weiter als den ersten Abstand von der zweiten UE angeordnet ist.

6. Verfahren, das von einer zweiten Benutzereinrichtung, UE, durchgeführt wird, zur Durchführung von Vorrichtung-zu-Vorrichtung-,D2D-,Datenübertragungen an eine erste UE, wobei das Verfahren umfasst:
Senden (910) einer ersten Datenübertragung an die erste UE;
Empfangen (920) einer Zeitdomänensequenz, die eine Mehrzahl von Zeitdomänenwiederholungen einer Basissequenz umfasst, von der ersten UE, wobei jede Wiederholung einen ersten Hybrid-ARQ-,HARQ-,Indikator dessen überträgt, ob die erste Datenübertragung von der ersten UE korrekt empfangen wurde;
Bestimmen (930) eines ersten Satzes von Frequenzdomänenparametern zur Verwendung während der jeweiligen Empfangsoperationen für eine oder mehrere der Zeitdomänenwiederholungen; und
Durchführen (960) einer Empfangsoperation in Bezug auf das Erkennen des ersten HARQ-Indikators für jede Zeitdomänenwiederholung;
wobei der erste Satz von Frequenzdomänenparametern Folgendes umfasst: eine Basis-Frequenzdomänensequenz; eine Breite X; und einen Versatz Y;
wobei X einen Frequenzdomänenabstand zwischen aufeinanderfolgenden Elementen der Basis-Frequenzdomänensequenz anzeigt; und
Y eine Frequenzdomänenposition des ersten Elements der Basis-Frequenzdomänensequenz anzeigt;
wobei das Bestimmen (930) des ersten Satzes von Frequenzdomänenparametern ein Erhalten (931) eines oder mehrerer Kriterien von einem Netzwerkknoten in einem Funkzugangsnetzwerk, RAN, oder aus einem Speicher der zweiten UE zum Auswählen des ersten Satzes von Frequenzdomänenparametern umfasst;
wobei die erste Datenübertragung eine Groupcast-Übertragung ist; und
das eine oder die mehreren Kriterien eine Beziehung zum Bestimmen von X in Abhängigkeit von der Anzahl von UEs umfassen, für die die erste Datenübertragung bestimmt ist; und
wobei das Durchführen (960) einer Empfangsoperation für jede Zeitdomänenwiederholung umfasst:
Durchführen (962) einer ersten Empfangsoperation für eine erste Anzahl von aufeinanderfolgenden Zeitdomänenwiederholungen am Beginn der Zeitdomänensequenz, wobei die erste Empfangsoperation ein Wechseln vom Sendemodus zum Empfangsmodus umfasst;
Durchführen (963) einer zweiten Empfangsoperation für eine zweite Anzahl von aufeinanderfolgenden Zeitdomänenwiederholungen nach der ersten Anzahl von aufeinanderfolgenden Zeitdomänenwiederholungen, wobei die zweite Empfangsoperation ein Trainieren einer Schleife mit automatischer Verstärkungsregelung, AGC, umfasst;
Durchführen (964) einer dritten Empfangsoperation für eine dritte Anzahl von aufeinanderfolgenden Zeitdomänenwiederholungen nach der zweiten Anzahl von aufeinanderfolgenden Zeitdomänenwiederholungen, wobei die dritte Empfangsoperation ein Schätzen des Funkkanals zwischen der zweiten UE und der ersten UE umfasst;
Durchführen (965) einer vierten Empfangsoperation für eine vierte Anzahl von aufeinanderfolgenden Zeitdomänenwiederholungen nach der dritten Anzahl von aufeinanderfolgenden Zeitdomänenwiederholungen, wobei die vierte Empfangsoperation ein Erkennen des ersten HARQ-Indikators umfasst; und
Durchführen (966) einer fünften Empfangsoperation für eine fünfte Anzahl von aufeinanderfolgenden Zeitdomänenwiederholungen nach der vierten Anzahl von aufeinanderfolgenden Zeitdomänenwiederholungen, wobei die fünfte Empfangsoperation ein Wechseln vom Empfangsmodus zum Sendemodus umfasst.

7. Verfahren nach Anspruch 6, wobei mindestens eine der ersten Anzahl, der zweiten Anzahl, der dritten Anzahl und der fünften Anzahl null beträgt.

8. Verfahren nach Anspruch 6, ferner umfassend ein Auswählen (940) einer oder mehrerer der ersten Anzahl, der zweiten Anzahl, der dritten Anzahl, der vierten Anzahl und der fünften Anzahl basierend auf einem von Folgenden:
früheren Messungen von Signalqualität, Synchronisationsqualität und/oder Störpegel;
Schätzungen von aktueller Signalqualität, aktueller Synchronisationsqualität und/oder aktuellem Störpegel;
Schätzungen von aktueller Drehzahl, Geschwindigkeit, Position und/oder Richtung der UE; und
verstrichener Zeit seit einer vorherigen HARQ-Übertragung, die von der ersten UE empfangen wird.

9. Verfahren nach einem der Ansprüche 6 bis 8, wobei für eine oder mehrere der Zeitdomänenwiederholungen das Durchführen (960) der Empfangsoperation ein Transformieren (967) der Zeitdomänenwiederholung in die Frequenzdomäne unter Verwendung eines FFT-Demodulators umfasst.

10. Verfahren nach einem der Ansprüche 6 bis 9, wobei:
der erste Satz von Frequenzdomänenparametern aus einer Mehrzahl von Sätzen von Frequenzdomänenparametern ausgewählt wird; und
die jeweiligen Sätze mit jeweiligen Basis-Frequenzdomänensequenzen assoziiert werden; und
die jeweiligen Basis-Frequenzdomänensequenzen auf einer gemeinsamen Stammsequenz basieren, die um jeweilige zyklische Verschiebungen verschoben ist, die für jede Basis-Frequenzdomänensequenz eindeutig sind.

11. Verfahren nach einem der Ansprüche 6 bis 10, wobei das Bestimmen (930) des ersten Satzes von Frequenzdomänenparametern auf mindestens einem von Folgenden basiert:
Sidelink-Steuerinformationen, SCI, die an die erste UE gesendet werden;
einer oder mehreren Kennungen, wobei jede Kennung mit der ersten UE oder mit der zweiten UE assoziiert ist;
Frequenzdomänenressourcen, die für die erste Datenübertragung oder für die Übertragung des ersten HARQ-Indikators zugewiesen sind;
einem Übertragungsparameter, der mit der ersten Datenübertragung oder mit der Übertragung des ersten HARQ-Indikators assoziiert ist;
einem Synchronisationsstatus mindestens einer der ersten UE und der zweiten UE;
einer Beziehung zwischen einer Übertragungszeit der ersten Datenübertragung und einer Übertragungszeit des ersten HARQ-Indikators;
mindestens einem der Standorte der ersten UE und der der zweiten UE.

12. Verfahren nach Anspruch 11, wobei das Bestimmen (930) des ersten Satzes von Frequenzdomänenparametern umfasst:
Auswählen (932) eines spezifischen Satzes als den ersten Satz von Frequenzdomänenparametern, falls ein erster Satz von Frequenzdomänenressourcen für die erste Datenübertragung oder für die Übertragung des ersten HARQ-Indikators zugewiesen ist; und
Auswählen (933) eines weiteren Satzes als den ersten Satz von Frequenzdomänenparametern, falls ein zweiter Satz von Frequenzdomänenressourcen für die erste Datenübertragung oder für die Übertragung des ersten HARQ-Indikators zugewiesen ist.

13. Verfahren nach Anspruch 11, wobei das Bestimmen (930) des ersten Satzes von Frequenzdomänenparametern umfasst:
Auswählen (934) eines spezifischen Satzes als den ersten Satz von Frequenzdomänenparametern, falls die erste UE nicht weiter als einen ersten Abstand von der zweiten UE angeordnet ist; und
Auswählen (935) eines weiteren Satzes als den ersten Satz von Frequenzdomänenparametern, falls die erste UE weiter als den ersten Abstand von der zweiten UE angeordnet ist.

14. Benutzereinrichtung, UE, (120, 430-360, 1000), die zum Durchführen von Vorrichtung-zu-Vorrichtung-,D2D-,Datenübertragungen mit einer anderen UE (120, 430-360, 1000) konfiguriert ist, wobei die UE ferner zum Durchführen von Operationen gemäß einem der Verfahren nach Anspruch 1 bis 5 oder 6 bis 13 ausgelegt ist.

## Revendications

1. Procédé réalisé par un premier équipement utilisateur, UE, pour recevoir des transmissions de données de dispositif à dispositif, D2D, depuis un deuxième UE, le procédé comprenant :
la réception (810), depuis le deuxième UE, d'une première transmission de données ;
la détermination (820) si la première transmission de données a été correctement reçue ou non ;
la détermination (830) d'un premier ensemble de paramètres de domaine de fréquence à utiliser pour générer une séquence de domaine de temps ; et
la transmission (850), au deuxième UE en utilisant une séquence de domaine de temps générée à partir du premier ensemble de paramètres de domaine de fréquence et comprenant une pluralité de répétitions de domaine de temps de la séquence de domaine de fréquence de base, chaque répétition portant un premier indicateur d'ARQ hybride, HARQ, de si la première transmission de données a été correctement reçue ou non ;
dans lequel le premier ensemble de paramètres de domaine de fréquence inclut ce qui suit : la séquence de domaine de fréquence de base ; une largeur X indiquant un espacement de domaine de fréquence entre des éléments successifs de la séquence de domaine de fréquence de base ; et un décalage Y indiquant une position de domaine de fréquence du premier élément de la séquence de domaine de fréquence de base ;
dans lequel la détermination (830) du premier ensemble de paramètres de domaine de fréquence comprend l'obtention (831), depuis un noeud de réseau dans un réseau d'accès radio, RAN, ou depuis une mémoire du premier UE, d'un ou plusieurs critères pour sélectionner le premier ensemble de paramètres de domaine de fréquence ;
dans lequel la première transmission de données est une transmission de diffusion en groupe ; et les un ou plusieurs critères incluent une relation pour déterminer X en fonction du nombre d'UE ciblés par la première transmission de données.

2. Procédé selon la revendication 1, comprenant en outre la génération (840) de la séquence de domaine de temps à partir du premier ensemble de paramètres de domaine de fréquence en utilisant un modulateur de FFT inverse, IFFT, dans lequel X indique un espacement entre des entrées IFFT et Y indique une entrée IFFT de début.

3. Procédé selon la revendication 1 ou 2, dans lequel la détermination (830) du premier ensemble de paramètres de domaine de fréquence est basée sur un ou plusieurs parmi ce qui suit :
des informations de commande de liaison latérale, SCI, reçues depuis le deuxième UE ;
un ou plusieurs identifiants, chaque identifiant étant associé au premier UE ou au deuxième UE ;
des ressources de domaine de fréquence allouées pour la première transmission de données ou pour la transmission du premier indicateur HARQ ;
un paramètre de transmission associé à la première transmission de données ou à la transmission du premier indicateur HARQ ;
un statut de synchronisation d'au moins l'un du premier UE et du deuxième UE ;
une relation entre un temps de transmission de la première transmission de données et un temps de transmission du premier indicateur HARQ ;
au moins l'un des emplacements du premier UE et du deuxième UE.

4. Procédé selon la revendication 3, dans lequel la détermination (830) du premier ensemble de paramètres de domaine de fréquence comprend :
la sélection (832) d'un ensemble particulier en tant que le premier ensemble de paramètres de domaine de fréquence si un premier ensemble de ressources de domaine de fréquence est alloué pour la première transmission de données ou pour la transmission du premier indicateur HARQ ; et
la sélection (833) d'un autre ensemble en tant que le premier ensemble de paramètres de domaine de fréquence si un deuxième ensemble de ressources de domaine de fréquence est alloué pour la première transmission de données ou pour la transmission du premier indicateur HARQ.

5. Procédé selon la revendication 3, dans lequel la détermination (830) du premier ensemble de paramètres de domaine de fréquence comprend :
la sélection (834) d'un ensemble particulier en tant que le premier ensemble de paramètres de domaine de fréquence si le premier UE est situé au plus à une première distance du deuxième UE ; et
la sélection (835) d'un autre ensemble en tant que le premier ensemble de paramètres de domaine de fréquence si le premier UE est situé à plus que la première distance du deuxième UE.

6. Procédé réalisé par un deuxième équipement utilisateur, UE, pour réaliser des transmissions de données de dispositif à dispositif, D2D, à un premier UE, le procédé comprenant :
la transmission (910), au premier UE, d'une première transmission de données ;
la réception (920), depuis le premier UE, d'une séquence de domaine de temps comprenant une pluralité de répétitions de domaine de temps d'une séquence de base, chaque répétition portant un premier indicateur d'ARQ hybride, HARQ, indiquant si la première transmission de données a été correctement reçue ou non par le premier UE ;
la détermination (930) d'un premier ensemble de paramètres de domaine de fréquence à utiliser au cours des opérations de réception respectives pour une ou plusieurs des répétitions de domaine de temps ; et
pour chaque répétition de domaine de temps, la réalisation (960) d'une opération de réception liée à la détection du premier indicateur HARQ ;
dans lequel le premier ensemble de paramètres de domaine de fréquence inclut ce qui suit : une séquence de domaine de fréquence de base ; une largeur X ; et un décalage Y ;
X indique un espacement de domaine de fréquence entre des éléments successifs de la séquence de domaine de fréquence de base ; et
Y indique une position de domaine de fréquence du premier élément de la séquence de domaine de fréquence de base ;
dans lequel la détermination (930) du premier ensemble de paramètres de domaine de fréquence comprend l'obtention (931), depuis un noeud de réseau dans un réseau d'accès radio, RAN, ou depuis une mémoire du deuxième UE, d'un ou plusieurs critères pour sélectionner le premier ensemble de paramètres de domaine de fréquence ;
dans lequel la première transmission de données est une transmission de diffusion en groupe ; et
les un ou plusieurs critères incluent une relation pour déterminer X en fonction du nombre d'UE ciblés par la première transmission de données ; et
dans lequel la réalisation (960) d'une opération de réception pour chaque répétition de domaine de temps comprend :
la réalisation (962) d'une première opération de réception pour un premier nombre de répétitions de domaine de temps consécutives au début de la séquence de domaine de temps, la première opération de réception comprenant la commutation d'un mode de transmission à un mode de réception ;
la réalisation (963) d'une deuxième opération de réception pour un deuxième nombre de répétitions de domaine de temps consécutives à la suite du premier nombre de répétitions de domaine de temps consécutives, la deuxième opération de réception comprenant l'entraînement d'une boucle de commande de gain automatique, AGC ;
la réalisation (964) d'une troisième opération de réception pour un troisième nombre de répétitions de domaine de temps consécutives à la suite du deuxième nombre de répétitions de domaine de temps consécutives, la troisième opération de réception comprenant l'estimation du canal radio entre le deuxième UE et le premier UE ;
la réalisation (965) d'une quatrième opération de réception pour un quatrième nombre de répétitions de domaine de temps consécutives à la suite du troisième nombre de répétitions de domaine de temps consécutives, la quatrième opération de réception comprenant la détection du premier indicateur HARQ ; et
la réalisation (966) d'une cinquième opération de réception pour un cinquième nombre de répétitions de domaine de temps consécutives à la suite du quatrième nombre de répétitions de domaine de temps consécutives, la cinquième opération de réception comprenant la commutation d'un mode de réception à un mode de transmission.

7. Procédé selon la revendication 6, dans lequel au moins l'un parmi le premier nombre, le deuxième nombre, le troisième nombre et le cinquième nombre est zéro.

8. Procédé selon la revendication 6, comprenant en outre la sélection (940) d'un ou plusieurs parmi le premier nombre, le deuxième nombre, le troisième nombre, le quatrième nombre et le cinquième nombre sur la base de l'un quelconque parmi ce qui suit :
des mesures antérieures de qualité de signal, de qualité de synchronisation et/ou de niveau d'interférence ;
des estimations de qualité de signal, de qualité de synchronisation et/ou de niveau d'interférence courants ;
des estimations de vitesse, de vélocité, d'emplacement et/ou de direction d'UE courants ; et
un temps écoulé depuis une transmission HARQ précédente reçue depuis le premier UE.

9. Procédé selon l'une quelconque des revendications 6 à 8, dans lequel, pour une ou plusieurs des répétitions de domaine de temps, la réalisation (960) de l'opération de réception comprend la transformation (967) de la répétition de domaine de temps dans le domaine de fréquence en utilisant un démodulateur FFT.

10. Procédé selon l'une quelconque des revendications 6 à 9, dans lequel :
le premier ensemble de paramètres de domaine de fréquence est sélectionné parmi une pluralité d'ensembles de paramètres de domaine de fréquence ; et
les ensembles respectifs sont associés à des séquences de domaine de fréquence de base respectives ; et
les séquences de domaine de fréquence de base respectives sont basées sur une séquence racine commune qui est déplacée par des déplacements circulaires respectifs qui sont uniques pour chaque séquence de domaine de fréquence de base.

11. Procédé selon l'une quelconque des revendications 6 à 10, dans lequel la détermination (930) du premier ensemble de paramètres de domaine de fréquence est basée sur un ou plusieurs parmi ce qui suit :
des informations de commande de liaison latérale, SCI, envoyées au premier UE ;
un ou plusieurs identifiants, chaque identifiant étant associé au premier UE ou au deuxième UE ;
des ressources de domaine de fréquence allouées pour la première transmission de données ou pour la transmission du premier indicateur HARQ ;
un paramètre de transmission associé à la première transmission de données ou à la transmission du premier indicateur HARQ ;
un statut de synchronisation d'au moins l'un du premier UE et du deuxième UE ;
une relation entre un temps de transmission de la première transmission de données et un temps de transmission du premier indicateur HARQ ;
au moins l'un des emplacements du premier UE et du deuxième UE.

12. Procédé selon la revendication 11, dans lequel la détermination (930) du premier ensemble de paramètres de domaine de fréquence comprend :
la sélection (932) d'un ensemble particulier en tant que le premier ensemble de paramètres de domaine de fréquence si un premier ensemble de ressources de domaine de fréquence est alloué pour la première transmission de données ou pour la transmission du premier indicateur HARQ ; et
la sélection (933) d'un autre ensemble en tant que le premier ensemble de paramètres de domaine de fréquence si un deuxième ensemble de ressources de domaine de fréquence est alloué pour la première transmission de données ou pour la transmission du premier indicateur HARQ.

13. Procédé selon la revendication 11, dans lequel la détermination (930) du premier ensemble de paramètres de domaine de fréquence comprend :
la sélection (934) d'un ensemble particulier en tant que le premier ensemble de paramètres de domaine de fréquence si le premier UE est situé au plus à une première distance du deuxième UE ; et
la sélection (935) d'un autre ensemble en tant que le premier ensemble de paramètres de domaine de fréquence si le premier UE est situé à plus que la première distance du deuxième UE.

14. Equipement utilisateur, UE, (120, 430-360, 1000) configuré pour réaliser des transmissions de données de dispositif à dispositif, D2D, avec un autre UE (120, 430-360, 1000), l'UE étant en outre agencé pour réaliser des opérations correspondant à l'un quelconque des procédés selon les revendications 1 à 5 ou les revendications 6 à 13.
